(19) **Europäisches Patentamt**
**European Patent Office**
**Office européen des brevets**

(11) **EP 4 543 134 A1**

(12) **EUROPEAN PATENT APPLICATION**
published in accordance with Art. 153(4) EPC

(43) Date of publication:
**23.04.2025 Bulletin 2025/17**

(21) Application number: **23874996.4**

(22) Date of filing: **12.06.2023**

(51) International Patent Classification (IPC):
**H04W 76/15** (2018.01)     **H04W 28/04** (2009.01)
**H04W 24/02** (2009.01)     **H04W 84/12** (2009.01)
**H04W 88/02** (2009.01)     **H04W 88/06** (2009.01)

(52) Cooperative Patent Classification (CPC):
**H04W 24/08; H04W 76/15; H04W 76/20**

(86) International application number:
**PCT/KR2023/008051**

(87) International publication number:
**WO 2024/075925 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2022 KR 20220128660**
**17.11.2022 KR 20220154167**

(71) Applicant: **Samsung Electronics Co., Ltd.**
**Suwon-si, Gyeonggi-do 16677 (KR)**

(72) Inventors:
• **YUN, Jusik**
**Suwon-si, Gyeonggi-do 16677 (KR)**
• **KIM, Taeyong**
**Suwon-si, Gyeonggi-do 16677 (KR)**
• **MIN, Sungbin**
**Suwon-si, Gyeonggi-do 16677 (KR)**
• **MIN, Hyunkee**
**Suwon-si, Gyeonggi-do 16677 (KR)**
• **JUNG, Junyeop**
**Suwon-si, Gyeonggi-do 16677 (KR)**
• **CHOI, Junsu**
**Suwon-si, Gyeonggi-do 16677 (KR)**
• **CHOI, Hyeonu**
**Suwon-si, Gyeonggi-do 16677 (KR)**

(74) Representative: **HGF**
**HGF Limited**
**1 City Walk**
**Leeds LS11 9DX (GB)**

(54) **ELECTRONIC DEVICE FOR TRANSMITTING SAME DATA THROUGH MULTIPLE LINKS AND OPERATION METHOD THEREOF**

(57) Disclosed are an electronic device and an operation method thereof according to various embodiments, the electronic device comprising: a communication circuit for short-range wireless communication through multiple links established between the electronic device and an external electronic device; and a processor operatively connected to the communication circuit. The processor can: check the state of the multiple links on the basis of information transmitted by the external electronic device; select one of a first mode, in which data is divided and transmitted through the multiple links, or a second mode, in which the same data is transmitted through the multiple links, on the basis of the state of the multiple links; and control the communication circuit to transmit the data to the external electronic device through the selected mode. Various other embodiments are possible.

FIG. 5

500

510     520

| COMMUNICATION CIRCUIT | ⟷ | PROCESSOR |

## Description

### [Technical Field]

Various embodiments of the disclosure relate to an electronic device and a method for operating an electronic device and, more particularly, to a technology for transmitting identical data through multiple links.

### [Background Art]

In line with widespread use of various electronic devices, the speed of wireless communication available to various electronic devices has been increased. Among wireless communication standards supported by recent electronic devices, IEEE 802.11 WLAN (or Wi-Fi) refers to a standard for implementing high-speed wireless connection between various electronic devices. Initially implemented Wi-Fi was able to support a maximum transmission speed of 1-9Mbps, but Wi-Fi 6 technology (or IEEE 802.11ax) is able to support a maximum transmission speed of about 10Gbps.

Through wireless communication that supports a high transmission speed, an electronic device may support various services that use a relatively large amount of data (for example, a UHD-quality video streaming service, an augmented reality (AR) service, a virtual reality (VR) service, and/or a mixed reality (MR) service), as well as various other services.

The IEEE 802.11 WLAN standard is planning to introduce a technology for supporting a multi-link operation (MLO) in order to increase the data transmission/reception speed and to reduce latency. Electronic devices supporting the MLO are capable of transmitting or receiving data through multiple links, and thus are expected to be able to implement a relatively high transmission speed and a low latency.

### [Disclosure of Invention]

### [Technical Problem]

An electronic device may transmit data to an external electronic device through multiple links or receive data therefrom. The transmission time necessary to transmit divided data through multiple links may be shorter than the transmission time necessary to transmit data through one link, and a high data transmission speed or reception speed may thus be implemented by transmitting and/or receiving divided data through multiple links.

However, in a situation in which the state of multiple links deteriorates, a failure to transmit or receive a part of data through one link may correspond to a failure to transmit or receive the entire data, and the time necessary to retransmit a part of the data may increase the latency necessary to transmit the entire data.

Technical problems to be solved by the disclosure are not limited to the above-mentioned technical problems, and other technical problems not mentioned herein will be clearly understood from the following description by those skilled in the art to which the disclosure pertains.

### [Solution to Problem]

An electronic device according to an embodiment may include a communication circuit configured to perform short-range wireless communication through one link or multiple links generated between an external electronic device and the electronic device. The electronic device may include a processor operatively connected to the communication circuit. The processor may identify the state of the multiple links, based on information transmitted by the external electronic device. The processor may select one mode from a first mode in which data is divided and transmitted through the multiple links and a second mode in which identical data is transmitted through the multiple links, based on the state of the multiple links. The processor may control the communication circuit so as to transmit the data to the external electronic device through the selected mode.

A method for operating an electronic device according to an embodiment may include identifying the state of multiple links generated to perform short-range wireless communication between an external electronic device and the electronic device, based on information transmitted by the external electronic device. A method for operating an electronic device may include selecting one mode from a first mode in which data is divided and transmitted through the multiple links and a second mode in which identical data is transmitted through the multiple links, based on the state of the multiple links. The method for operating an electronic device may include transmitting the data to the external electronic device through the selected mode.

**[Advantageous Effects of invention]**

An electronic device and a method for operating an electronic device according to various embodiments of the disclosure may select one mode from a first mode in which data is divided and transmitted through the multiple links and a second mode in which identical data is transmitted through the multiple links, based on the state of the multiple links, and may transmit data to an external electronic device by using the selected mode. Therefore, the electronic device may adaptively select an operating mode according to the link state and may implement a low latency and/or a high transmission rate by selecting an operating mode conforming to the link state.

Advantageous effects obtainable from the disclosure are not limited to the above-mentioned advantageous effects, and other advantageous effects not mentioned herein will be clearly understood from the following description by those skilled in the art to which the disclosure pertains.

**[Brief Description of Drawings]**

FIG. 1 is a block diagram of an electronic device according to various embodiments.

FIG. 2 is a block diagram of a program according to various embodiments.

FIG. 3 illustrates an embodiment in which an electronic device and an access point (AP) make multi-link operations (MLO) according to various embodiments.

FIG. 4A illustrates an embodiment in which an electronic device performs medium synchronization of a link according to various embodiments.

FIG. 4B illustrates a link latency according to various embodiments.

FIG. 4C illustrates an embodiment in which an electronic device operates in a first mode in which data is divided and transmitted through multiple links according to various embodiments.

FIG. 4D illustrates an embodiment in which an electronic device operates in a second mode in which identical data is transmitted through multiple links according to various embodiments.

FIG. 5 is a block diagram of an electronic device according to various embodiments.

FIG. 6 is an operation flowchart illustrating a method for operating an electronic device according to various embodiments.

FIG. 7 is an operation flowchart illustrating an embodiment in which an electronic device transmits data by using one of a first mode or a second mode, based on a latency, according to various embodiments.

FIG. 8 is an operation flowchart illustrating an embodiment in which an electronic device adjusts the number of links through which identical data is transmitted, based on the number of redundant packets received from an external electronic device, according to various embodiments.

FIG. 9 is an operation flowchart illustrating an embodiment in which an electronic device adjusts the number of links through which identical data is transmitted, based on whether data retransmission occurs, according to various embodiments.

**[Mode for the Invention]**

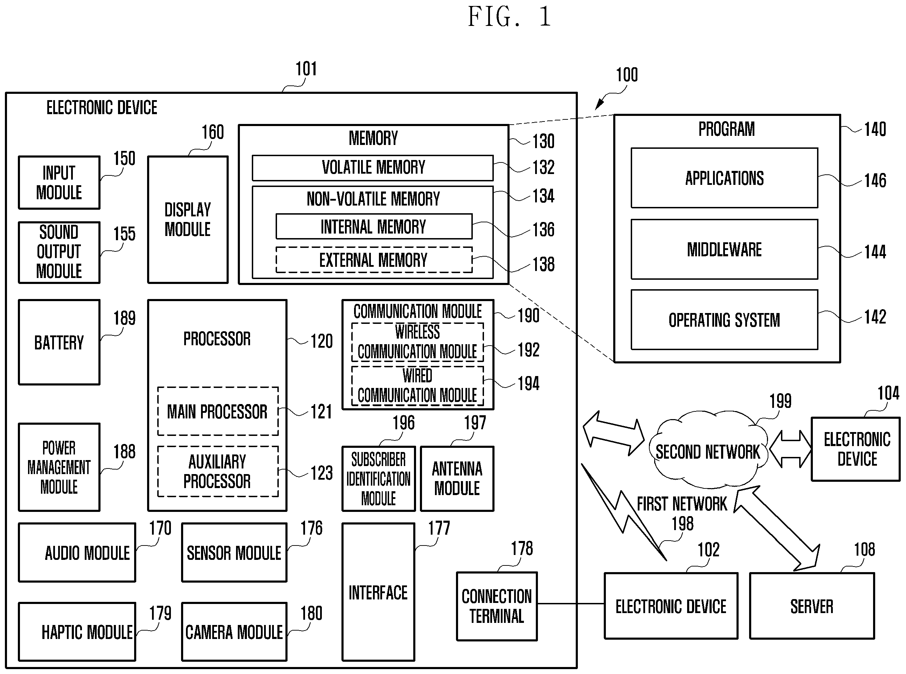

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g.,

the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

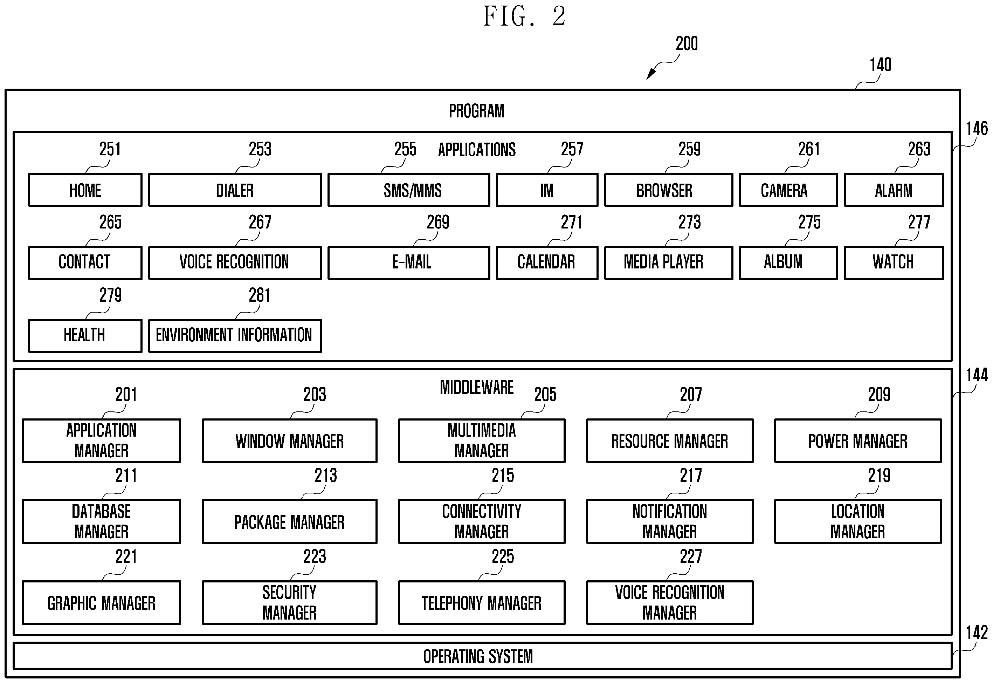

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM, iOSTM, WindowsTM, SymbianTM, TizenTM, or BadaTM. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130. The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

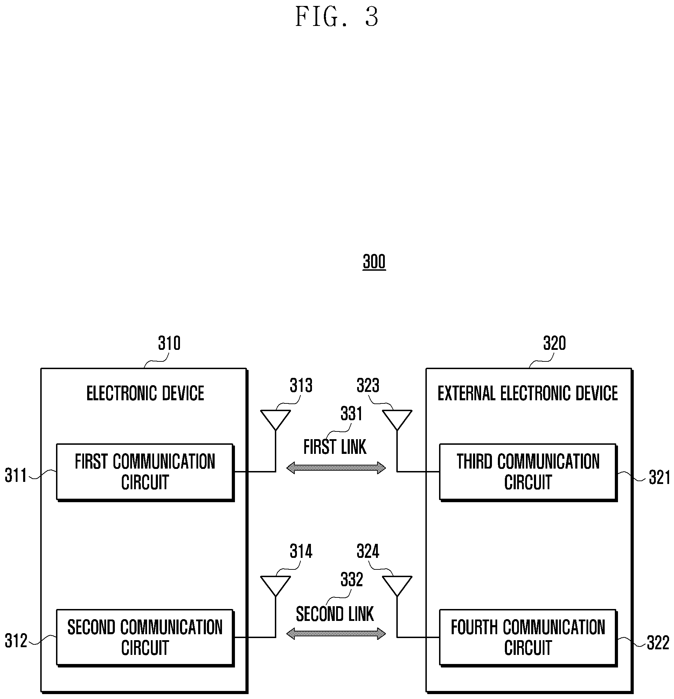

FIG. 3 illustrates an embodiment in which an electronic device and an access point (AP) make multi-link operations (MLO) according to various embodiments.

Referring to FIG. 3, the wireless LAN system 300 may include an electronic device 310 and/or an external electronic device 320. According to an embodiment, the electronic device 310 may perform wireless communication with the external electronic device 320 through short-range wireless communication. The wireless communication may refer to various communication schemes that both the electronic device 310 and/or the external electronic device 320 may support. For example, the wireless communication may be Wi-Fi. The external electronic device 320 may play the role of a base station that provides wireless communication to at least one electronic device 310 positioned within a communication radius of the wireless LAN system 300. As an example, the external electronic device 320 may include an access point (AP) based on IEEE 802.11. The electronic device 310 may include a station (STA) based on IEEE 802.11.

According to various embodiments of the disclosure, the electronic device 310 and/or the external electronic device 320 may support a multi-link operation (MLO). The MLO may refer to an operation mode in which data is transmitted or received through multiple links (for example, a first link 331 and a second link 332). The MLO may refer to an operation mode which is expected to be introduced by IEEE 802.11be, and in which data is transmitted or received through multiple links based on multiple bands or channels.

According to various embodiments of the disclosure, the electronic device 310 may include multiple communication circuits (for example, a first communication circuit 311 and/or a second communication circuit 312) in order to support the MLO. The first communication circuit 311 may transmit data to the external electronic device 320 through the first link 331 or may receive data transmitted by the external electronic device 320 through the first link 331. The first communication circuit 311 may output or receive a signal in a frequency band corresponding to the first link 331 through the first antenna 313. The second communication circuit 312 may transmit data to the external electronic device 320 through the second link 332 or may receive data transmitted by the external electronic device 320 through the second link 332. The second communication circuit 312 may output or receive a signal in a frequency band corresponding to the second link 332 through the second antenna 314.

According to various embodiments of the disclosure, the external electronic device 320 may include multiple communication circuits (for example, a third communication circuit 321 and/or a fourth communication circuit 322) in order to support the MLO. The third communication circuit 321 may transmit data to the electronic device 310 through the first link 331 or may receive data transmitted by the electronic device 310 through the first link 331. The third communication circuit 321 may output or receive a signal in a frequency band corresponding to the first link 331 through the third antenna 323. The fourth communication circuit 322 may transmit data to the electronic device 310 through the second link 332 or may receive data transmitted by the electronic device 310 through the second link 332. The fourth communication circuit 322 may output or receive a signal in a frequency band corresponding to the second link 332 through the fourth antenna 324.

According to various embodiments of the disclosure, the frequency band of the first link 331 and the frequency band of the second link 333 may differ from each other. For example, the frequency band of the first link 331 may be 2.5GHz, and the frequency band of the second link 333 may be 5GHz or 6GHz.

According to various embodiments of the disclosure, the first link 331 and the second 332 may be used by an electronic device other than the electronic device 310. In order to avoid a situation in which an electronic device other than the electronic device 310 simultaneously transmits or receives data through an identical link, the electronic device 310 may support a carrier sense multiple access with collision avoidance (CSMA/CA) scheme. The CSMA/CA scheme may refer to a scheme for transmitting data when a specific link (for example, the first link 331 and/or the second link 332) is in an idle state. The electronic device 310 supporting the CSMA/CA may confirm whether another electronic device is transmitting data through the specific link and, upon sensing data transmission, may stand by without transmitting data through the specific link. In response to confirming that no other electronic device is transmitting data through the specific link, the electronic device 310 supporting the CSMA/CA may transmit data through the specific link according to a designated scheme (for example, activating a timer and transmitting data if the timer expires). Through the above-mentioned scheme, the electronic device 310 may perform data transmission and/or reception by using the specific link without colliding with another electronic device.

According to various embodiments of the disclosure, the first link 331 and/or the second link 332 supported by the MLO may independently support the CSMA/CA.

The electronic device 310 supporting the CSMA/CA scheme may confirm whether a specific link is in an idle state, prior to transmitting data. The electronic device 310 may transmit data through the specific link that is in an idle state.

The electronic device 310 may confirm whether the first link 331 is in an idle state, based on information related to the idle state of the first link 331 included in data transmitted by the external electronic device 320. The information related to the idle state of the first link 331 may include a clear channel assessment (CCA) state field and/or a network allocation vector (NAV) configuration field. The information related to the idle state of the first link 331 may be included in a ready-to-send (RTS) message requiring data transmission through the first link 331 or in a clear-to-send (CTS) message indicating that data transmission through the first link 331 is possible. The electronic device 310 may confirm whether a specific link is in an idle state with reference to a clear channel assessment (CCA) state field and/or a network allocation vector (NAV) configuration field. The electronic device 310 may confirm whether the first link 331 is physically in an idle state with reference to the CCA state field, and may confirm whether the first link 331 is logically in an idle state with reference to the NAV configuration field. In response to confirming that the first link 331 is in an idle state, the electronic device 310 may activate a timer and, in response to expiration of the timer after a designated time, may transmit data to the external electronic device 320 through the first link 331.

The electronic device 310 may confirm whether the second link 332 is in an idle state, based on information related to the idle state of the second link 332 included in data transmitted by the external electronic device 320. The information related to the idle state of the second link 332 may include a clear channel assessment (CCA) state field and/or a network allocation vector (NAV) configuration field. The information related to the idle state of the second link 332 may be included in a ready-to-send (RTS) message requiring data transmission through the second link 332 or in a clear-to-send (CTS) message indicating that data transmission through the second link 332 is possible. The electronic device 310 may confirm whether a specific link is in an idle state with reference to a clear channel assessment (CCA) state field and/or a network allocation vector (NAV) configuration field. The electronic device 310 may confirm whether the second link 332 is physically in an idle state with reference to the CCA state field and may confirm whether the second link 332 is logically in an idle state with reference to the NAV configuration field. In response to confirming that a specific link is in an idle state, the electronic device 310 may activate a timer and, in response to expiration of the timer after a designated time, may transmit data to the external electronic device 320 through the second link 332.

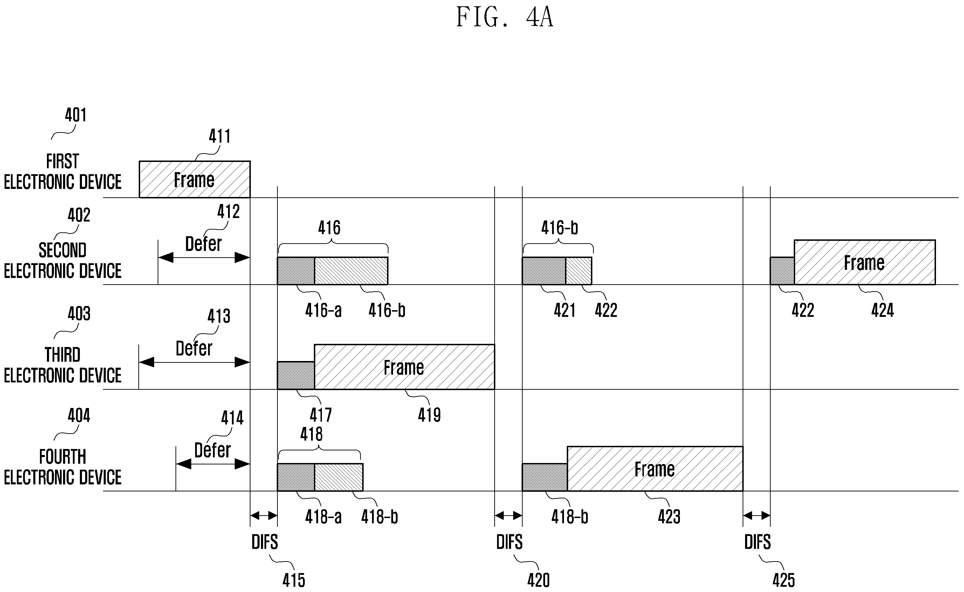

FIG. 4A illustrates an embodiment in which an electronic device performs medium synchronization of a link according to various embodiments.

FIG. 4A illustrates an embodiment in which a first electronic device 401 (for example, the electronic device 310 in FIG. 3), a second electronic device 402 (for example, the electronic device 310 in FIG. 3), a third electronic device 403 (for example, the electronic device 310 in FIG. 3), and/or a fourth electronic device 404 (for example, the electronic device 310 in FIG. 3) transmit data to an external electronic device 320 by using an identical link (for example, the second link 332 in FIG. 3).

According to various embodiments of the disclosure, the first electronic device 401, the second electronic device 402, the third electronic device 403, and/or the fourth electronic device 404 may perform data transmission through a CSMA/CA scheme. The first electronic device 401, the second electronic device 402, the third electronic device 403, and/or the fourth electronic device 404 may perform medium synchronization of the second link 332 prior to performing data transmission. Medium synchronization of the second link 332 may refer to a state in which the state of the second link 332 can be updated in real time. Medium synchronization of the second link 332 may be performed by using a part of data (for example, the header of data) transmitted through the second link 332.

The first electronic device 401 supporting the CSMA/CA scheme may confirm whether a specific link (for example, the first link 331 and/or the second link 332) is in an idle state, prior to transmitting data 411. The first electronic device 401 may confirm whether the second link 332 is in an idle state, based on information related to the idle state of the second link 332 included in data transmitted by the external electronic device 320. The information related to the idle state of the second link 332 may include a clear channel assessment (CCA) state field and/or a network allocation vector (NAV) configuration field. The information related to the idle state of the second link 332 may be included in a ready-to-send (RTS) message requiring data transmission through the second link 332 or in a clear-to-send (CTS) message indicating that data transmission through the second link 332 is possible. The first electronic device 401 may confirm whether a specific link is in an idle state with reference to a clear channel assessment (CCA) state field and/or a network allocation vector (NAV) configuration field. The first electronic device 401 may confirm whether the second link 332 is physically in an idle state with reference to the CCA state field and may confirm whether the second link 332 is logically in an idle state with reference to the NAV configuration field. In response to confirming that a specific link is in an idle state, the first electronic device 401 may activate a timer and, in response to expiration of the timer after a designated time, may transmit data 411 to the external electronic device 320 through the second link 332.

The second electronic device 402, the third electronic device 403, and/or the fourth electronic device 404 which support the CSMA/CA may stand by (412, 413, and 414) without transmitting other data while the first electronic device 401 transmits data 411. The second electronic device 402, the third electronic device 403, and/or the fourth electronic device 404 may assess the time at which transmission of the data 411 ends, based on a part of the data 411 transmitted through the second link 332 (for example, a rate field of data included in a physical layer (PHY) header and/or a length field of the data, a duration field of data included in a media access control (MAC) header), and may stand by for a predetermined time 415 based on ending of transmission of the data 411.

The second electronic device 402, the third electronic device 403, and/or the fourth electronic device 404 may activate a timer after the predetermined time 415 elapses and, in response to expiration of the timer, may transmit data to the external electronic device 320 through the second link 332. The length of the timer configured in the second electronic device 402, the third electronic device 403, and/or the fourth electronic device 404 may differ from each other. According to an embodiment, the second electronic device 402, the third electronic device 403, and/or the fourth electronic device 404 may use a randomly configured timer so as to confirm whether the timer expires, and may transmit data as the timer expires.

Referring to FIG. 4A, the second electronic device 402 may activate a timer having a first period of time 416 configured therefor, the third electronic device 403 may activate a timer having a second period of time 417 configured therefor, and the fourth electronic device 404 may activate a timer having a third period of time 418 configured therefor. The first period of time 416, the second period of time 417, and/or the third period of time 418 may differ from each other. Referring to FIG. 4A, the first period of time 416 may be longer than the third period of time 418, and the third period of time 418 may be longer than the second period of time 417.

According to various embodiments of the disclosure, the third electronic device 403 may transmit data 419 to the external electronic device 320 through the second link 332 in response to confirming expiration of the third period of time 417. The second electronic device 402 and/or the fourth electronic device 404 may stand by without transmitting other data while the third electronic device 403 transmits data 419. The second electronic device 402 may store a remaining period of time 416-b obtained by subtracting an elapsed period of time 416-a from the first period of time 416, and the fourth electronic device 404 may store a remaining period of time 418-b obtained by subtracting an elapsed period of time 418-a from the third period of time 418. The second electronic device 402 and/or the fourth electronic device 404 may assess the time at which transmission of the data 419 ends, based on a part of the data 419 transmitted through the second link 332 (for example, a rate field of data included in a PHY header and/or a length field of the data, a duration field of data included in a MAC header), and may stand by for a predetermined time 420 based on ending of transmission of the data 419.

The second electronic device 402 and/or the fourth electronic device 404 may again activate the timer after the predetermined time 420 elapses. The fourth electronic device 404 may transmit data 423 to the external electronic device 320 through the second link 332 in response to confirming expiration of the remaining period of time 418-b. The second electronic device 402 may sense transmission of data 423 by the fourth electronic device 404 before expiration of the remaining period of time 416-b, and may again deactivate the timer operation. The second electronic device 420 may store a remaining period of time 422 obtained by subtracting an elapsed period of time 421 from the remaining period of time 416-b. The second electronic device 402 may assess the time at which transmission of the data 423 ends, based on a part of the data 423 transmitted through the second link 332 (for example, a rate field of data included in a PHY header and/or a length field of the data, a duration field of data included in a MAC header), and may stand by for a predetermined time 425 based on ending of transmission of the data 423.

The second electronic device 402 may again activate the timer after the predetermined time 425 elapses. The fourth electronic device 404 may transmit data 424 to the external electronic device 320 through the second link 332 in response to confirming expiration of the remaining period of time 422.

As in the above-described scheme, the first electronic device 401, the second electronic device 402, the third electronic device 403, and/or the fourth electronic device 404 may perform medium synchronization of the second link 332.

Through the scheme illustrated in FIG. 4A, the first electronic device 401, the second electronic device 402, the third electronic device 403, and/or the fourth electronic device 404 which support the CSMA/CA may transmit data to the external electronic device 320 through the second link 332, with no collision.

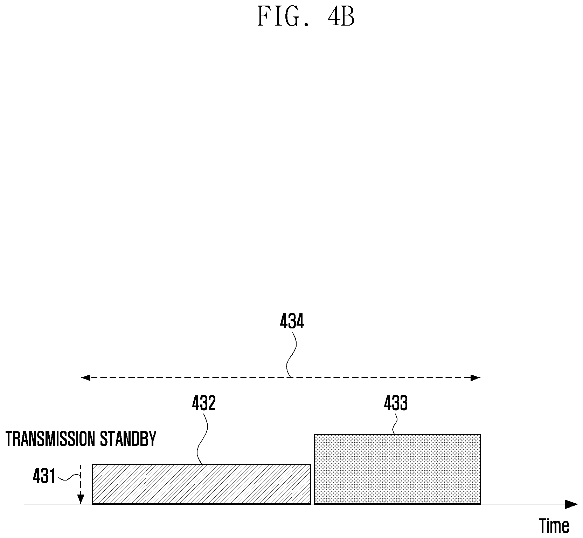

FIG. 4B illustrates a link latency according to various embodiments of the disclosure.

Referring to FIG. 4B, an electronic device (for example, the first electronic device 401, the second electronic device 402, the third electronic device 403, and/or the fourth electronic device 404 in FIG. 4A) may transmit data through a link (for example, the first link 331 in FIG. 3 or the second link 332 in FIG. 3) provided by an AP (for example, the external electronic device 302 in FIG. 3). Although the second electronic device 402 will be assumed to be the electronic device 402 in the description with reference to FIG. 4B for convenience of description, the description with reference to FIG. 4B is applicable to other electronic devices (for example, the first electronic device 401, the third electronic device 403, and/or the fourth electronic device 404 in FIG. 4A). According to an embodiment, the electronic device 402 may transmit service-related data through the link 331 or 332 generated between the electronic device 402 and the AP 302 in order to perform various services (for example, a streaming service, a voice call, or a video call) on the electronic device 402.

The electronic device 402 may sense the necessity of data transmission and may await data transmission 431. The electronic device 402 may perform data transmission through the link 331 or 332 by using the CSMA/CA scheme as illustrated in FIG. 4A.

The electronic device 402 may confirm that the link 331 or 332 is in an idle state for data transmission and may activate a timer. The electronic device 402 may confirm that the link 331 or 332 is occupied by another electronic device (for example, the first electronic device 401, the third electronic device 403, or the fourth electronic device 404 in FIG. 4A) before the activated timer expires, and may switch the timer to a deactivated state. The electronic device 420 may stand by without transmitting data through the link 331 or 332.

The electronic device 402 may await data transmission until the timer expires, provided that the link 331 or 332 is in an idle state. The time during which data transmission is awaited may be defined as a contention time 432.

The electronic device 402 may confirm that the link 331 or 332 is in an idle state again, may activate the deactivated timer again, and may transmit data through the link 331 or 332 after expiration of the remaining time of the timer. The period of time between a timepoint at which data transmission starts and a timepoint at which data transmission is completed may be defined as a transmission time 433.

Referring to FIG. 4B, the period of time between a timepoint 431 at which the electronic device 402 awaits data transmission and a timepoint at which data transmission is completed may be defined as a latency 434.

The latency 434 may be configured as a value that represents the state of a link. According to an example, the contention time 432 included in the latency 434 may change depending on the state of the link. For example, the contention time 432 may increase as the channel occupancy ratio of the link increases, and if the contention time 432 is long, the state of the link may be deemed to be relatively poor. As another example, the contention time 432 may decrease as the channel occupancy ratio of the link decreases, and if the contention time 432 is short, the state of the link may be deemed to be relatively good. Therefore, if the latency 434 is relatively long, the state of the link may be deemed to be relatively poor, and if the latency 434 is relatively short, the state of the link may be deemed to be relatively good.

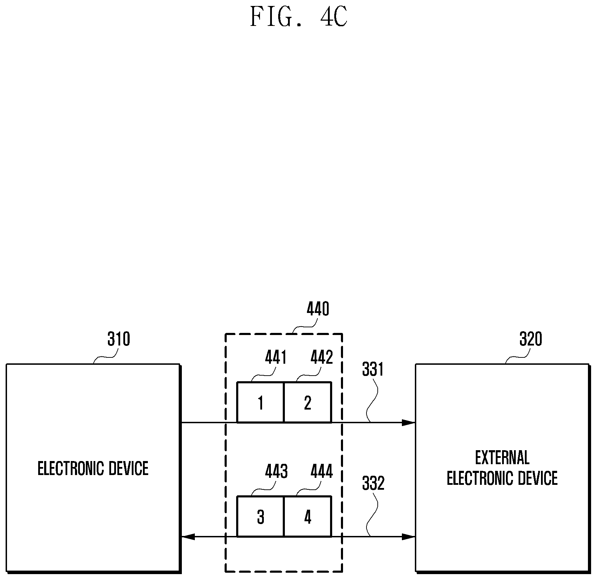

FIG. 4C illustrates an embodiment in which an electronic device operates in a first mode in which data is divided and transmitted through multiple links according to various embodiments.

The electronic device (for example, the electronic device 310 in FIG. 3) may transmit data to an external electronic device (for example, the external electronic device 320 in FIG. 3) through multiple links including a first link (for example, the first link 331 in FIG. 3) and a second link (for example, the second link 333 in FIG. 3).

The electronic device 310 may support a first mode in which data 440 is divided and transmitted through multiple links. While operating in the first mode, the electronic device 310 may transmit at least parts 441 and 442 of the data 440 to the external electronic device 320 through the first link 331 and may transmit other parts 443 and 444 of the data 440 to the external electronic device 320 through the second link 332. When the electronic device 310 operates in the first mode, the data 440 may be divided and transmitted to the external electronic device 320 through multiple links, thereby increasing the data transmission speed.

However, the probability that the data 440 will be transmitted successfully may be relatively low if the electronic device 310 transmits the data 440 to the external electronic device 320 by using the first mode in a situation in which the multiple links are in a poor state.

According to an example, assuming that the probability of successful transmission of data through the first link 331 is 80%, and that the probability of successful transmission of data 440 through the second link 332 is 70%, the probability that the electronic device 310 will successfully transmit data 440 to the external electronic device 320 at the first attempt by using the first mode may be 56% (0.8*0.7). Furthermore, if the rate of transmission of data 440 through a specific link (for example, the second link 332) decreases, the electronic device 310 may perform retransmission of other parts 443 and 444 of the data 440 through a link through which transmission of the data 440 has failed, and the retransmission of other parts 443 and 444 of the data 440 may increase the latency of transmission of the data 440.

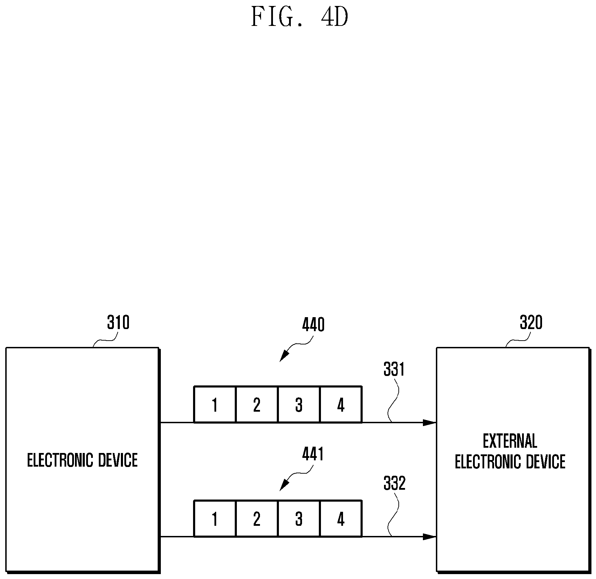

FIG. 4D illustrates an embodiment in which an electronic device operates in a second mode in which identical data is transmitted through multiple links according to various embodiments.

The electronic device (for example, the electronic device 310 in FIG. 3) may transmit data to an external electronic device (for example, the external electronic device 320 in FIG. 3) through multiple links including a first link (for example, the first link 331 in FIG. 3) and a second link (for example, the second link 333 in FIG. 3).

The electronic device 310 may support a second mode in which identical data 440 is transmitted through multiple links. While operating in the second mode, the electronic device 310 may duplicate data 440 to be transmitted to the external electronic device 320, thereby generating duplicated data 441 which is identical to the data 440. The electronic device 310 may transmit the data 440 to the external electronic device 320 through the first link 331 and may transmit the duplicated data 441 to the external electronic device 320 through the second link 332. When operating in the second mode, the electronic device 310 may transmit identical pieces of data 440 and 441 to the external electronic device 320 through multiple links, thereby improving the probability of successful data transmission.

According to an example, assuming that the probability of successful transmission of data through the first link 331 is 80%, and that the probability of successful transmission of data 440 through the second link 332 is 70%, the probability that the electronic device 310 will successfully transmit data 440 to the external electronic device 320 at the first attempt by using the second mode may be 94% (1- 0.2*0.3). Considering that the probability that the electronic device 310 will successfully transmit data 440 to the external electronic device 320 at the first attempt by using the first mode is 56% as described with reference to FIG. 4C, a higher probability of successful data transmission may be implemented in the second mode than in the first mode.

However, in a situation in which the multiple links are in a good state, the probability of successful data transmission may be sufficiently high even if the electronic device 310 transmits data 440 by using the first mode. Therefore, if the electronic device 310 transmits data 440 to the external electronic device 320 by using the second mode in a situation in which the multiple links are in a good state, a high latency may occur.

Hereinafter, an embodiment in which the electronic device 310 transmits data to the external electronic device 320 by using one of the first mode and the second mode, based on the state of the multiple links, thereby implementing a low latency and/or a high probability of successful data transmission, will be described.

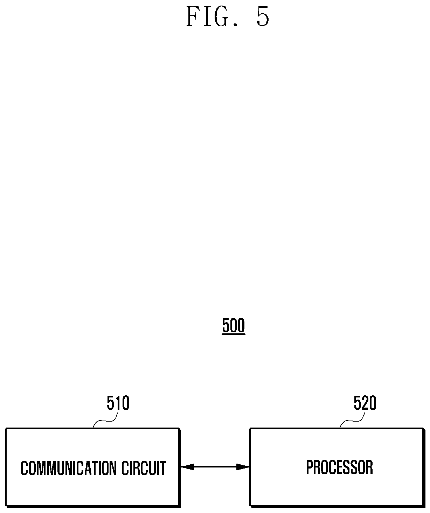

FIG. 5 is a block diagram of an electronic device according to various embodiments.

According to various embodiments of the disclosure, the electronic device 500 (for example, the electronic device 310 in FIG. 3) may include a communication circuit 510 (for example, the first communication circuit 311 or the second communication circuit 312 in FIG. 4B) and/or a processor 520 (for example, the processor 120 in FIG. 1).

Although a first electronic device 401 will be assumed to be a different external electronic device 401 in the description with reference to FIG. 5 for convenience of description, the description with reference to FIG. 5 is applicable to other electronic devices (for example, the second electronic device 402, the third electronic device 403, and/or the fourth electronic device 404 in FIG. 4A). The different external electronic device 401 may be configured to transmit data to an external electronic device (for example, the external electronic device 320 in FIG. 3) or receive data from the external electronic device 320.

The communication circuit 510 may include various circuit structures used to modulate and/or demodulate signals inside the electronic device 500. For example, the communication circuit 510 may modulate a signal in a baseband into a signal in a radio frequency (RF) band so as to be output through an antenna (not illustrated), or may demodulate a signal in the RF band received through the antenna into a signal in the baseband and transmit the same to the processor 520.

The communication circuit 510 may transmit multiple packets to an AP (for example, the external electronic device 320 in FIG. 3) through a first link (for example, the first link 331 in FIG. 3) or may receive data transmitted by the external electronic device 320 through the first link 331. The communication circuit 510 may transmit a packet to the external electronic device 320 through a second link (for example, the second link 332 in FIG. 3) or may receive a packet transmitted by the external electronic device 320 through the second link 332. The communication circuit 510 may output or receive a signal in a frequency band corresponding to the first link 331 through an antenna (for example, the first antenna 313 in FIG. 3), and may output or receive a signal in a frequency band corresponding to the second link 332 through an antenna (for example, the second antenna 314 in FIG. 3).

The processor 520 may perform an operation of receiving data transmitted by an application processor (for example, the processor 120 in FIG. 1) and generating a packet for transmitting the received data to the external electronic device 320. The processor 520 may be defined as a communication processor included in a communication module (for example, the wireless communication module 192 in FIG. 1). According to an embodiment, the processor 520 may perform an operation of performing channel coding based on data transmitted by an application processor (for example, the application processor 120 in FIG. 1), thereby generating a packet, confirming whether at least a part of data transmitted by the external electronic device 320 has an error, or restoring an error that has occurred (for example, a hybrid auto repeat request (HARQ)).

The processor 520 may be operatively connected to the communication circuit 510 so as to control operations of the communication circuit 510. The processor 520 may receive data transmitted by the application processor 120 and may select a channel to be used to transmit or receive a packet corresponding to the data, based on the characteristics of a service included in the data.

The processor 520 may transmit data to an external electronic device (for example, the external electronic device 320 in FIG. 3) by using one of a first mode in which data is divided and transmitted through multiple links and a second mode in which identical data is transmitted through multiple links.

According to an example, data to be transmitted may be at least one aggregate-MPDU (A-MPDU) including multiple MAC protocol data units (MPDU), but may include not only the MPDU, but also other pieces of data that can be implemented in various types in the disclosure.

The processor 520 may identify the state of multiple links, including the first link 331 and the second link 332, in order to select a mode between the first mode and the second mode.

The processor 520 may identify the state of multiple links in various types applicable thereto.

According to an example, as a part of an operation of identifying the state of multiple links, the processor 520 may use a latency to identify the state of multiple links.

The processor 520 may identify a first latency needed to transmit data in the first mode in which data is divided and transmitted through multiple links and/or a second latency needed to transmit data in a second mode in which identical data is transmitted through multiple links. The processor 520 may identify the state of multiple links by comparing the first latency and the second latency. According to an example, a situation in which the first latency is larger than the second latency may corresponds to a situation in which the link state is relatively poor. According to another example, a situation in which the first latency is smaller than the second latency may corresponds to a situation in which the link state is relatively good. An embodiment in which the link state is identified based on the latency will be described hereinafter. However, the link state may be identified not only based on the latency, but also in various other types applicable thereto in the disclosure. According to an example, the processor 520 may identify the channel occupancy ratio of multiple links and may identify the link state based on the channel occupancy ratio.

As described with reference to FIG. 4B, the latency may be determined based on a contention time between a timepoint at which a standby for data transmission starts and a timepoint at which data transmission starts, and a transmission time between a timepoint at which data transmission starts and a timepoint at which data transmission is completed.

According to an embodiment, the processor 520 may determine that the sum of the contention time and the transmission time is the latency. According to an embodiment, the processor 520 may determine that the sum of the contention time, the transmission time, and another time (for example, a distributed inter frame space (DIFS)) is the latency.

In connection with determining (or predicting) the contention time, the processor 520 may determine the time necessary for all counters allocated to the electronic device 500 to be reduced. The electronic device 500 may be able to transmit data when all counters are reduced, and the time necessary for all counters to be reduced (for example, the time during which another electronic device transmits data and, if the link to be monitored is in an idle state, the time necessary to reduce counters may be included) may have an identical or similar value as the contention time. Therefore, the processor 520 may determine the time necessary for all counters allocated to the electronic device 500 to be reduced, and may configured the determined time as the contention time, thereby predicting (or determining) the accurate contention time.

In connection with determining the time necessary for all counters allocated to the electronic device 500 to be reduced, the processor 520 may identify the time necessary for the counters to be reduced by a designated unit (for example, 1 slot), may multiply the time necessary for the counters to be reduced by a designated unit (for example, 1 slot) by a designated number of times, and may configure the resulting product as the time necessary for all counters allocated to the electronic device 500 to be reduced.

The processor 520 may identify the ratio between the time necessary for a counter that can be used by the electronic device 500 to perform CSMA/CA-type contention to be reduced by a designated unit (for example, 1 slot) and the time during which a link to be monitored remains idle. The ratio between the time necessary for a counter to be reduced by a designated unit (for example, 1 slot) and the time during which a link to be monitored remains idle may refer to the number of times reduction is possible if the link to be monitored remains idle, and if the electronic device 500 has participated in contention.

For example, the processor 520 may identify the ratio between the time necessary for a counter to be reduced by a designated unit (for example, 1 slot) and the time during which the first link 331 remains idle by using Equation 1 below:

[Equation 1]

$$\frac{Ton - Tcca}{Tslot}$$

($T_{on}$: time during which a link to be monitored is monitored, $T_{cca}$: time during which the link to be monitored is occupied by another external electronic device 401, and $T_{slot}$: time necessary for the counter to be reduced by one unit)

Referring to Equation 1, the difference between a first time during which a link to be monitored is monitored and a second time during which the link to be monitored is occupied by another external electronic device 401 may refer to the time during which the link to be monitored remains idle (or during which the electronic device 500 may reduce the counter), and a value obtained by dividing the time during which the link to be monitored remains idle by the time necessary for the counter to be reduced by one unit may refer to the number of counters that the electronic device 500 may reduce during the idle time.

Alternatively, the processor 520 may identify the ratio between the time necessary for a counter to be reduced by a designated unit (for example, 1 slot) and the time during which a link to be monitored remains idle, based on a first time during which the link to be monitored is monitored and a third time during which the link to be monitored remains idle.

The processor 520 may identify the contention time of the electronic device 400 when one counter is reduced. The processor 520 may identify a contention time per unit, which refers to the contention time of the electronic device 400 when one counter is reduced, by dividing a second time during which the link to be monitored is occupied by another external electronic device 401 by the number of counters that the electronic device 500 may reduce during the idle time, acquired by Equation 1. For example, the processor 520 may identify a contention time per counter unit, based on Equation 2 below:

[Equation 2]

$$\frac{Tcca * Tslot}{Ton - Tcca}$$

($T_{on}$: first time during which a link to be monitored is monitored, $T_{cca}$: second time during which the link to be monitored is occupied by another external electronic device 401, and $T_{slot}$: time necessary for the counter to be reduced by one unit)

Referring to Equation 2, the value obtained by dividing the second time during which the link to be monitored is occupied by another external electronic device 401 by the number of counters that the electronic device 500 may reduce may refer to the contention time per counter unit.

The processor 520 may determine the contention time by multiplying the contention time per counter unit time by a designated number of times of counters. The designated number of times of counters may refer to the number of counters to be allocated when the electronic device 500 participates in contention. The designated number of times of counters may be determined by a case in which the electronic device 500 participates in contention. Therefore, the processor 520 may configure the average value of counters be allocated when the electronic device 500 participates in contention as a designated number of times, and may determine the contention time accordingly. The average value of counters be allocated may be the average of values of counters that may be allocated to the electronic device 500. Alternatively, average value of counters be allocated may be the average of values of counters previously allocated to the electronic device 500. Alternatively, the average value of counters be allocated may be the average value of values of counters acquired as the electronic device 500 monitors a link to be monitored (for example, values of counters that have been allocated to the electronic device 500 or to another external electronic device 401). According to an example, the processor 520 may determine the contention time, based on Equation 3 below:

[Equation 3]

$$\frac{Tcca * Tslot * Nslot}{Ton - Tcca}$$

($T_{on}$: first time during which a link to be monitored is monitored, $T_{cca}$: second time during which the link to be monitored is occupied by another external electronic device 401, $T_{slot}$: time necessary for the counter to be reduced by one unit, and $N_{slot}$: the number of counters that may be allocated when the electronic device 500 participates in contention)

As a part of an operation for determining the latency, the processor 520 may determine a transmission time between a timepoint at which data transmission starts and a timepoint at which data transmission is completed.

In connection with determining the transmission time, the processor 520 may determine the transmission time based on the size of data to be transmitted and an uplink reference data rate of the link to be monitored. The processor 520 may determine the transmission time by dividing the size of data to be transmitted by the data rate. The processor 520 may determine the transmission time based on Equation 4 below:

[Equation 4]

$$T_{tx} = \frac{payload}{Rul}$$

($T_{tx}$: data transmission time, *payload:* data size, and $R_{ul}$: uplink reference data rate of the link to be monitored)

In connection with determining the transmission time, the processor 520 may determine the transmission time based on the type of a service currently performed by the electronic device 500 or the type of data. For example, when the electronic device 500 is currently performing a service by which a relatively large amount of data is transmitted, the processor 520 may determine the transmission time by configuring a large data size. When the type of data to be transmitted by the electronic device 500 has a relatively large amount, the processor 520 may determine the transmission time by configuring a large data size.

The processor 520 may determine the latency based on the contention time and the transmission time. The processor 520 may determine the latency by adding the contention time and the transmission time.

According to an example, the processor 520 may determine (or identify) a first latency, which refers to a latency needed to transmit data through one of multiple links while operating in a first mode, by using Equation 5 below:

[Equation 5]

$$T_i^{MLO} = (transmission\ time) + (contention\ time)\ = T_{i,tx} + \frac{T_{i,CCA}T_{slot}N_{slot}}{T_{i,on} - T_{i,CCA}}$$

( $T_i^{MLO}$ : latency of data transmission through $i$th link, $T_{i,tx}$: transmission time of data transmission through $i$th link, Ton: first time during which $i$th link is monitored, Tcca: second time during which $i$th link is occupied by an external electronic device 401, Tslot: time necessary for the counter to be reduced by one unit, and $N_{slot}$: the number of counters that may be allocated when the electronic device 500 participates in contention)

The processor 520 may determine (or identify) the latency of each of multiple links, and may determine a first latency which is the latency of data transmission while operating in the first mode by using the harmonic average of the latency of each of multiple links.

According to an example, the processor 520 may determine (or identify) the latency of each of multiple links, and determine a first latency which is the latency of data transmission while operating in the first mode in which data is divided and transmitted through multiple links, by using Equation 6 below:

[Equation 6]

$$T_{latency}^{MLO} = \frac{1}{\sum_1^K \frac{1}{T_i^{MLO}}}$$

( $T_{latency}^{MLO}$ : latency necessary to divide and transmit data through multiple links, K: the number of links generated between the electronic device 500 and an external electronic device 320, and $T_i^{MLO}$ : latency of data transmission through $i$th link)

According to Equation 6 above, the latency may be determined assuming that data transmission succeeds at the first attempt. In other words, Equation 6 may refer to a latency necessary for a single transmission opportunity. The processor 520 may determine the first latency by additionally considering the number of transmissions necessary while data transmission succeeds.

The processor 520 may determine (or identify) the number of transmissions (TXOP) necessary for data transmission while operating in the first mode, by using Equation 7 below:

[Equation 7]

$$\frac{N}{\sum_i^K N_i P_i}$$

(N: data size, $N_i$: size of part of data to be transmitted through $i$th link, $P_i$: probability that data transmission through $i$th link will succeed, and K: the number of links generated between the electronic device 500 and the external electronic device 320)

When data is divided and transmitted through multiple links in a situation in which the electronic device 500 operates in the first mode, successful data transmission may be implemented only if data transmission through each of the multiple links succeeds. Therefore, referring to Equation 7, the number of transmissions necessary to transmit data in the first mode may be determined by using a value obtained by dividing the data size by the sum of effective sizes of data transmission through each link (the product of the size of part of data and the probability or successful transmission).

In connection with determining the first latency, the processor 520 may determine the first latency based on the product of the latency of data transmission at a single transmission opportunity determined through Equation 6 and the number of transmissions determined through Equation 7.

According to an example, the processor 520 may determine the first latency by using Equation 8 below:

[Equation 8]

$$\frac{N}{\sum_i^K N_i P_i} \times T_{latency}^{MLO}$$

(N: data size, $N_i$: size of part of data to be transmitted through $i$th link, $P_i$: probability that data transmission through $i$th link will succeed, K: the number of links generated between the electronic device 500 and the external electronic device 320, and $T_{latency}^{MLO}$: latency necessary to divide and transmit data through multiple links)

The processor 520 may identify a second latency necessary to transmit data while operating in a second mode in which identical data is transmitted through multiple links. Various pieces of information used to determine the second latency may be directly acquired by the electronic device 500 or received from the external electronic device 320.

According to an example, the processor 520 may determine (or identify) a second latency which refers to a latency necessary to transmit data through one of multiple links while operating in the second mode, by using Equation 9 below:

[Equation 9]

$$T_i^{AD-MLO} = (transmission\ time) + (contention\ time)\ = K * T_{i,tx} + \frac{T_{i,CCA} T_{slot} N_{slot}}{T_{i,on} - T_{i,CCA}}$$

( $T_i^{AD-MLO}$ : latency of data transmission through $i$th link, K: the number of links generated between the electronic device 500 and the external electronic device 320, $T_{i,tx}$: transmission time of data transmission through $i$th link, Ton: first time during which $i$th link is monitored, Tcca: second time during which $i$th link is occupied by an external electronic device 3, Tslot: time necessary for a counter to be reduced by one unit, and Nslot: the number of counters that may be allocated when the electronic device 500 participates in contention)

The processor 520 may determine (or identify) the latency of each of multiple links and may determine a second latency which is the latency of data transmission while operating in the second mode by using the harmonic average of the latency of each of multiple links.

According to an example, the processor 520 may determine (or identify) the latency of each of multiple links, and may determine a second latency which is the latency of data transmission while operating in the second mode in which identical data is transmitted through multiple links, by using Equation 10 below:

[Equation 10]

$$T_{latency}^{AD-MLO} = \frac{1}{\sum_i^K \frac{1}{T_i^{AD-MLO}}}$$

( $T_{latency}^{AD-MLO}$ : latency necessary to transmit identical data through multiple links, K: the number of links generated between the electronic device 500 and the external electronic device 320, and $T_i^{AD-MLO}$ : latency of data transmission through $i^{th}$ link)

According to Equation 10 above, the latency may be determined assuming that data transmission succeeds at the first attempt. In other words, Equation 10 may refer to a latency necessary for a single transmission opportunity. The processor 520 may determine the second latency by additionally considering the number of transmissions necessary while data transmission succeeds.

The processor 520 may determine (or identify) the number of transmissions (TXOP) necessary for data transmission while operating in the second mode, by using Equation 11 below:

[Equation 11]

$$\frac{1}{1 - \prod_i^K (1 - P_i)}$$

($P_i$: probability that data transmission through $i^{th}$ link will succeed, and K: the number of links generated between the electronic device 500 and the external electronic device 320)

When identical data is transmitted through multiple links in a situation in which the electronic device 500 operates in the second mode, successful data transmission may be implemented if data transmission succeeds through one of the multiple links. Therefore, referring to Equation 11, the number of transmissions necessary to transmit data in the second mode may be the reciprocal of a value $(1 - \prod_i^K (1 - P_i))$ obtained by subtracting the probability $(\prod_i^K (1 - P_i))$ that data transmission through all of the multiple links will fail from the entire probability (1).

In connection with determining the second latency, the processor 520 may determine the second latency based on the product of the latency of data transmission at a single transmission opportunity determined through Equation 10 and the number of transmissions determined through Equation 11.

According to an example, the processor 520 may determine the second latency by using Equation 12 below:

[Equation 12]

$$\frac{1}{1 - \prod_i^K (1 - P_i)} \times T_{latency}^{AD-MLO}$$

($P_i$: probability that data transmission through $i^{th}$ link will succeed, K: the number of links generated between the electronic device 500 and the external electronic device 320, and $T_{latency}^{AD-MLO}$ : latency necessary to transmit identical data through multiple links)

The processor 520 may identify a first latency necessary to transmit data while the electronic device 500 operates in the first mode and/or a second latency necessary to transmit data while the electronic device 500 operates in the second mode, through the above-described scheme.

The processor 520 may compare the first latency and the second latency and may identify the state of multiple links based on the result of comparison.

According to an example, the processor 520 may confirm that the second latency is equal to or larger than (or exceeds) the first latency and may confirm that the multiple links are in a good state. The description that the multiple links are in a good state may mean that, even if data is transmitted to the external electronic device 320 by using the first mode, a high probability of successful transmission may be implemented. The processor 520 may select the first mode, based on confirming that the second latency is equal to/larger than the first latency.

According to an example, the processor 520 may confirm that the second latency is equal to or smaller than (or below) the first latency and may confirm that the multiple links are in a poor state. The description that the multiple links are in a poor state may mean that, if data is transmitted to the external electronic device 320 by using the first mode, a low probability of successful transmission may be implemented. The processor 520 may select the second mode, based on confirming that the second latency is equal to or smaller than (or below) the first latency.

According to an example, the processor 520 may select the second mode, based on confirming that the second latency is equal to or smaller than (or below) the first latency and is smaller than a latency required by a service related to data transmission. The service can be efficiently performed only when the second latency is smaller than the latency required by the service related to data transmission.

If the second latency is larger than the latency required by the service related to data transmission, the processor 520 may not select the second mode. Alternatively, if the second latency is larger than the latency required by the service related to data transmission, the processor 520 may transmit data through a communication scheme (for example, cellular communication or D2D communication (for example, NAN or Wi-Fi direct) other than the currently used short-range wireless communication.

The processor 520 may support a third mode in which data is transmitted to or received from the external electronic device 320 through one link. In a state in which data is transmitted or received from the external electronic device 320 by using the third mode, the processor 520 may determine whether to switch to the second mode, based on the link state.

The processor 520 may identify the link state in various types applicable thereto.

According to an example, the processor 520 may identify the link state by using a latency, as a part of an operation of identifying the link state.

The processor 520 may identify a second latency necessary to transmit data in the second mode in which identical data is transmitted through multiple links and a third latency necessary to transmit data in the third mode in which data is transmitted through a single link. The processor 520 may identify the link state by comparing the second latency and the third latency.

As described with reference to FIG. 4B, a latency may be determined based on a contention time between a timepoint at which a standby for data transmission starts and a timepoint at which data transmission starts, and a transmission time between a timepoint at which data transmission starts and a timepoint at which data transmission is completed.

According to an embodiment, the processor 520 may determine that the sum of the contention time and the transmission time is the latency. According to an embodiment, the processor 520 may determine that the sum of the contention time, the transmission time, and another time (for example, a distributed inter frame space (DIFS)) is the latency.

The processor 520 may determine the latency necessary to transmit data in the third mode by using Equation 13 below:

[Equation 13]

$$T_i = \left(T_{tx} + \frac{T_{CCA}T_{slot}N_{slot}}{T_{on}-T_{CCA}}\right)P_i \quad + \quad 2 * \left(T_{tx} + \frac{T_{CCA}T_{slot}N_{slot}}{T_{on}-T_{CCA}}\right)P_i(1-P_i) + 3 * \left(T_{tx} + \right.$$

$$\left.\frac{T_{CCA}T_{slot}N_{slot}}{T_{on}-T_{CCA}}\right)P_i(1-P_i)^2 + \ldots = \sum_{n=1}^{N_{limit}} n\left(T_{tx} + \frac{T_{CCA}T_{slot}N_{slot}}{T_{on}-T_{CCA}}\right)P_i(1-P_i)^{n-1}$$

($T_i$: latency of data transmission through $i$th link, $T_{tx}$: transmission time of data transmission through $i$th link, $T_{on}$: first time during which $i$th link is monitored, $T_{cca}$: second time during which $i$th link is occupied by the external electronic device 401, $T_{slot}$: time necessary for a counter to be reduced by one unit, $N_{slot}$: the number of counters that may be allocated when the electronic device 500 participates in contention, $P_i$: probability of successful data transmission through $i$th link, and $N_{limit}$: the maximum number of retransmissions that can be supported by the communication circuit 510) The latency in Equation 13 may have a value determined by considering the probability of successful data transmission of links and the number of retransmissions).

The processor 520 may determine the latency necessary to transmit data in the second mode by using Equation 14 below:

[Equation 14]

$$T_{APD,K} = [\min_{i \in K}(T_{i,tx} + \frac{T_{i,CCA}T_{slot}N_{slot}}{T_{i,on}-T_{i,CCA}})\, P_i] \;+\; 2*[\min_{i \in K}\left(T_{i,tx} + \frac{T_{i,CCA}T_{slot}N_{slot}}{T_{i,on}-T_{i,CCA}}\right)P_i(1-P_i)] \;+$$

$$3*[\min_{i \in K}(T_{i,tx} + \frac{T_{i,CCA}T_{slot}N_{slot}}{T_{i,on}-T_{i,CCA}})\, P_i(1-P_i)^2] \;+\; \ldots \;=\; \sum_{n=1}^{\left\lfloor \frac{N_{limit}}{K} \right\rfloor} n\, [\min_{i \in K}(T_{i,tx} +$$

$$\frac{T_{i,CCA}T_{slot}N_{slot}}{T_{i,on}-T_{i,CCA}})\, P_i(1-P_i)^{n-1}]$$

($T_{APD,K}$: latency of data transmission through multiple links, $T_{i,tx}$: latency of data transmission through $i$th link, $T_{i,on}$: first time during which $i$th link is monitored, $T_{cca}$: second time during which $i$th link is occupied by the external electronic device 401, $T_{slot}$: time necessary for a counter to be reduced by one unit, $N_{slot}$: the number of counters that may be allocated when the electronic device 500 participates in contention, $P_i$: probability of successful data transmission through $i$th link, and $N_{limit}$: the maximum number of retransmissions that can be supported by the communication circuit 510)

Referring to Equation 14, in the second mode in which identical data is transmitted through multiple links, if transmission of data through one of the multiple links succeeds, data received by the external electronic device 320 through other links may not be processed because data transmitted through other links is redundant data. Therefore, the latency in the second mode may be determined such that the smallest latency among the latencies of data transmitted through the multiple links is the total latency.

The processor 520 may compare the latency in the third mode determined through Equation 13 and the latency in the second mode determined through Equation 14, and may determine whether to switch to the second mode, based on the result of comparison.

According to an example, the processor 520 may maintain the third mode if the latency in the third mode is smaller than the latency in the second mode.

According to an example, the processor 520 may determine to switch from the third mode to the second mode if the latency in the third mode is larger than the latency in the second mode.

According to an example, the processor 520 may determine to switch from the third mode to the second mode if the latency in the third mode is larger than the latency in the second mode, and if the latency in the second mode is smaller than the latency required by a service related to data transmission.

In response to determining to switch from the third mode to the second mode, the processor 520 may select (or determine) a combination of links to be used to transmit data and may transmit data to the external electronic device 320 through the selected combination of links.

In connection with selecting a combination of links, the processor 520 may select a combination of links requiring the condition that the latency occurring when transmitting data through the combination of links will be smaller than the latency required by the service related to data transmission. When multiple combinations of links satisfy the condition that the latency occurring when transmitting data through the combination of links will be smaller than the latency required by the service related to data transmission, the processor 520 may select a combination that may implement the least power consumption among the combinations of links.

When operating in the second mode, the processor 520 may transmit a signal including information indicating the operation in the second mode to the external electronic device 320. The information indicating the operation in the second mode may be included in various signals. According to an example, the processor 520 may control the communication circuit 510 so as to transmit various action frames defined by the service related to data transmission to the external electronic device 320. The processor 520 may have the information indicating the operation in the second mode included in a specific field included in an action frame.

According to an example, the processor 520 may have the information indicating the operation in the second mode included in a field (for example, a priority access multi-link element field) included in a specific service request frame (for example, an emergency preparedness communication service (EPCS) priority access enable request action frame) defined by a service (for example, an EPCS requiring a high level of reliability and a low latency (for example, ultra reliable and low latency communication (URLLC)).

While operating in the second mode, the processor 520 may adjust (increase or decrease) the number of links through which identical data is transmitted, based on the link state.

According to an example, while operating in the second mode, the processor 520 may receive information related to the number of times identical data is received from the external electronic device 320.

The information related to the number of times identical data is received may include the number of times a data unit having an identical sequence number, among multiple data units (for example, MPDU) included in the data, is received.

According to an example, the description that the external electronic device 320 receives a data unit having an identical sequence number relatively frequently may mean that the quality of multiple links improves.

According to an example, the description that the external electronic device 320 fails to receive a data unit having an identical sequence number relatively frequently may mean that the quality of multiple links deteriorates.

While operating in the second mode, the processor 520 may determine (or adjust) the number of links through which identical data is transmitted, based on information related to the number of times identical data is received, received from the external electronic device 320.

According to an example, the processor 520 may decrease the number of links through which identical data is transmitted, based on the number of times identical data is received satisfying a designated condition.

The designated condition may include a condition that the number of times the external electronic device 320 receives identical data is equal to or larger than a designated number of times, or a condition that the number of times the external electronic device 320 receives identical data increases. The description that the number of times the external electronic device 320 receives identical data increases may mean that the link quality improves. Therefore, by reducing the number of links, power consumption may be decreased while maintaining the service quality.

Based on that the number of times identical data is received and does not satisfy the designated condition, the processor 520 may not reduce the number of links through which identical data is transmitted (or may maintain or increase the number of links through which identical data is transmitted).

According to an example, while operating in the second mode, the processor 520 may identify the number of times identical data is retransmitted to the external electronic device 320. The number of times identical data is retransmitted may be received from the external electronic device 320 or directly identified by the electronic device 500.

The processor 520 may determine (or adjust) the number of links through which identical data is transmitted, based on whether identical data is retransmitted to the external electronic device 320, while operating in the second mode.

According to an example, based on confirming that identical data is retransmitted to the external electronic device 320, the processor 520 may increase the number of links through which identical data is transmitted. The description that identical data is retransmitted to the external electronic device 320 may mean that the link quality is poor. Therefore, based on that retransmission occurs, the processor 520 may increase the number of links through which identical data is transmitted.

According to an example, based on confirming that identical data is not retransmitted to the external electronic device 320, the processor 520 may not increase the number of links through which identical data is transmitted. The description that the number of links through which identical data is transmitted is not increased may include a situation in which the number of links through which identical data is transmitted is reduced or maintained.

According to an example, the processor 520 may receive information related to the number of times identical data is received and the number of times data has failed to be received, from the external electronic device 320, while operating in the second mode.

The information related to the number of times identical data is received and the number of times data has failed to be received may include the number of times a data unit having an identical sequence number, among multiple data units (for example, MPDU) is included in the data, and the number of data units that have failed to be received, among multiple data units is included in the data. Alternatively, the information related to the number of times identical data is received and the number of times data has failed to be received may include a difference value between the number of times a data unit having an identical sequence number, among multiple data units (for example, MPDU) is included in the data, and the number of data units that have failed to be received, among multiple data units included in the data.

According to an example, the description that the external electronic device 320 receives a data unit having an identical sequence number relatively frequently may mean that the quality of multiple links is improved.

According to an example, the description that the external electronic device 320 does not receive a data unit having an identical sequence number relatively frequently may mean that the quality of multiple links is degraded.

According to an example, the description that the number of data units that the external electronic device 320 has failed to receive is decreased may mean that the quality of multiple links is improved, and the description that the number of data units that the external electronic device 320 has failed to receive is increased may mean that the quality of multiple links is device is improved.

The processor 520 may decrease the number of links through which identical data is transmitted as the difference value between the number of times a data unit having an identical sequence number, among multiple data units (for example, MPDU) included in the data, and the number of data units that have failed to be received, among multiple data units included in the data, increases.

The description that the difference value between the number of times a data unit having an identical sequence number, among multiple data units (for example, MPDU) included in the data, and the number of data units that have failed to be received, among multiple data units included in the data, increases may mean that the number of times a data unit having an identical sequence number is received increases and/or that the number of data units that have failed to be received decreases, and may mean that the link quality is good. Therefore, the processor 520 may decrease the number of links through which identical data is transmitted.

The processor 520 may increase the number of links through which identical data is transmitted as the difference value between the number of times a data unit having an identical sequence number, among multiple data units (for example, MPDU) included in the data, and the number of data units that have failed to be received, among multiple data units included in the data, decreases. The description that identical data is retransmitted to the external electronic device 320 may mean that the link quality is poor.

The description that the difference value between the number of times a data unit having an identical sequence number, among multiple data units (for example, MPDU) included in the data, and the number of data units that have failed to be received, among multiple data units included in the data, decreases may mean that the number of times a data unit having an identical sequence number is received decreases and/or that the number of data units that have failed to be received increases, and may mean that the link quality is poor. Therefore, the processor 520 may increase the number of links through which identical data is transmitted, thereby increasing the probability of successful data transmission.

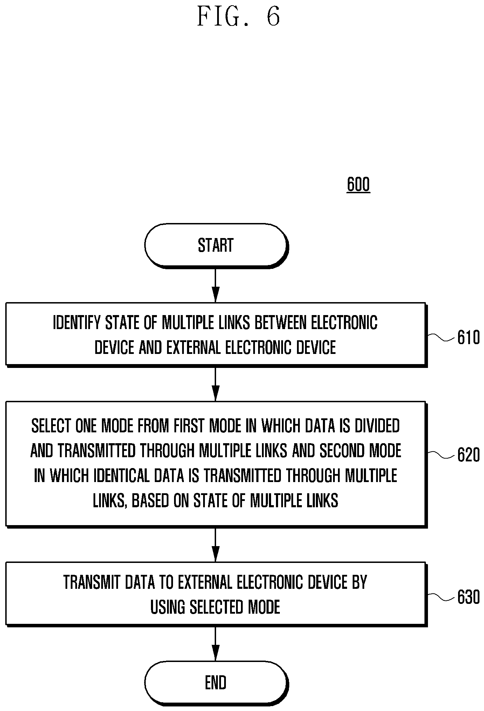

FIG. 6 is an operation flowchart 600 illustrating a method for operating an electronic device according to various embodiments.

The electronic device (for example, the electronic device 500 in FIG. 5) may identify the state of multiple links between the electronic device 500 and an external electronic device (for example, the external electronic device 320 in FIG. 3) in operation 610.

The electronic device 500 may identify the state of multiple links in various types applicable thereto.

According to an example, the electronic device 500 may identify the state of multiple links by using a latency, as a part of an operation of identifying the state of multiple links.

The electronic device 500 may identify a first latency needed to transmit data in a first mode in which data is divided and transmitted through multiple links and/or a second latency needed to transmit data in a second mode in which identical data is transmitted through multiple links.

The electronic device 500 may identify the state of multiple links by comparing the first latency and the second latency. According to an example, a situation in which the first latency is larger than the second latency may corresponds to a situation in which the link state is relatively poor. According to another example, a situation in which the first latency is smaller than the second latency may corresponds to a situation in which the link state is relatively good. However, the link state may be identified not only based on the latency, but also in various other types applicable thereto in the disclosure. According to an example, the electronic device 500 may identify the channel occupancy ratio of multiple links and may identify the link state based on the channel occupancy ratio.

As described with reference to FIG. 4B, the latency may be determined based on a contention time between a timepoint at which a standby for data transmission starts and a timepoint at which data transmission starts, and a transmission time between a timepoint at which data transmission starts and a timepoint at which data transmission is completed.

According to an embodiment, the electronic device 500 may determine that the sum of the contention time and the transmission time is the latency. According to an embodiment, the electronic device 500 may determine that the sum of the contention time, the transmission time, and another time (for example, a distributed inter frame space (DIFS)) is the latency.

According to an example, while operating in the first mode, the electronic device 500 may determine (or identify) a first latency which is a latency necessary to transmit data through one of multiple links.

The electronic device 500 may determine (or identify) the latency of each of multiple links and may determine a first latency which is a latency of data transmission while operating in the first mode by using the harmonic average of the latency of each of multiple links.

In connection with determining the first latency, the electronic device 500 may determine the first latency based on the product of the determined latency of data transmission at a single transmission opportunity and the determined number of transmissions.

The electronic device 500 may identify a second latency necessary to transmit data while operating in a second mode in which identical data is transmitted through multiple links. Various pieces of information used to determine the second latency may be directly acquired by the electronic device 500 or received from the external electronic device 320.

According to an example, while operating in the second mode, the electronic device 500 may determine (or identify) a second latency which is a latency necessary to transmit data through one of multiple links.

The electronic device 500 may determine (or identify) the latency of each of multiple links, and may determine a second latency which is the latency of data transmission while operating in the second mode by using the harmonic average of the latency of each of multiple links.

In connection with determining the second latency, the electronic device 500 may determine the second latency based on the product of the determined latency of data transmission at a single transmission opportunity and the determined number of transmissions.

The electronic device 500 may compare the first latency and the second latency and may identify the state of the multiple links based on the result of comparison.

According to an example, the electronic device 500 may confirm that the second latency is equal to or larger than (or exceeds) the first latency and may confirm that the multiple links are in a good state.

According to an example, the electronic device 500 may confirm that the second latency is equal to or smaller than (or below) the first latency and may confirm that the multiple links are in a poor state. The description that the multiple links are in a poor state may mean that, if data is transmitted to the external electronic device 320 by using the first mode, a low probability of successful transmission may be implemented.

The electronic device 500 may select a mode between a first mode in which data is divided and transmitted through multiple links and a second mode in which identical data is transmitted through multiple links, based on the state of the multiple links, in operation 620.

According to an example, the electronic device 500 may confirm that the second latency is equal to or larger than (or exceeds) the first latency and may confirm that the multiple links are in a good state. The description that the multiple links are in a good state may mean that, even if data is transmitted to the external electronic device 320 by using the first mode, a high probability of successful transmission may be implemented. The electronic device 500 may select the first mode, based on confirming that the second latency is equal to/larger than the first latency.

According to an example, the electronic device 500 may confirm that the second latency is equal to or smaller than (or below) the first latency and may confirm that the multiple links are in a poor state. The description that the multiple links are in a poor state may mean that, if data is transmitted to the external electronic device 320 by using the first mode, a low probability of successful transmission may be implemented. The electronic device 500 may select the second mode, based on confirming that the second latency is equal to/smaller than (or below) the first latency.

According to an example, the electronic device 500 may select the second mode, based on confirming that the second latency is equal to/smaller than (or below) the first latency and is smaller than a latency required by a service related to data transmission. The service can be efficiently performed only when the second latency is smaller than the latency required by the service related to data transmission.

The electronic device 500 may transmit data to the external electronic device 320 by using the selected mode in operation 630.

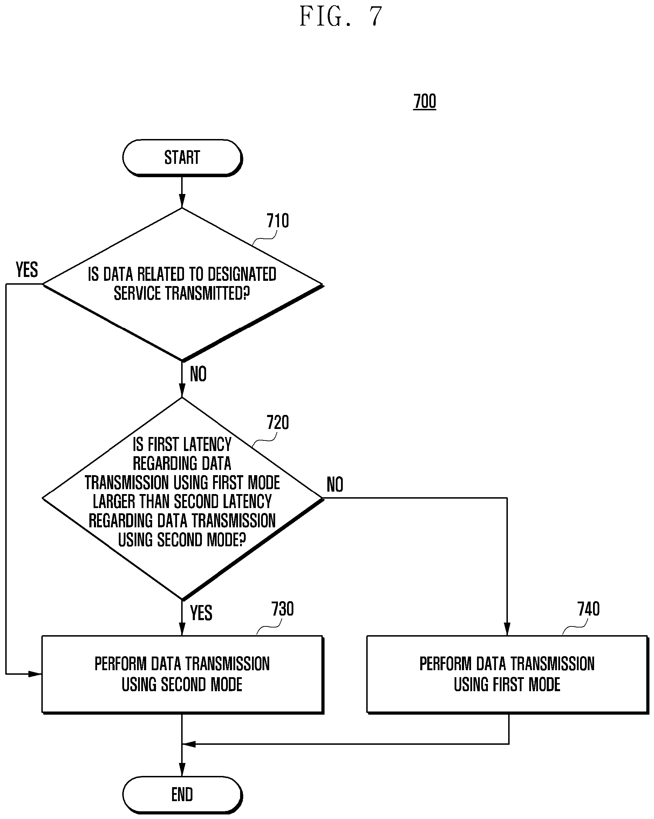

FIG. 7 is an operation flowchart 700 illustrating an embodiment in which an electronic device transmits data by using one of a first mode or a second mode, based on a latency, according to various embodiments.

The electronic device (for example, the electronic device 500 in FIG. 5) may confirm whether data related to a designated service is transmitted, in operation 710.

The designated service may refer to a service that requires transmission of data by using the second mode. According to an example, the designated service may require a relatively high level of reliability, and may include an emergency dispatch service (for example, 211, 911).

The electronic device 500 may identify information indicating a service type included in the header of a packet (or a data unit) included in data and may confirm whether the service type matches with a designated service, thereby confirming whether data related to a designated service is transmitted.

Based on that data related to a designated service is not transmitted (NO in operation 710), the electronic device 500 may confirm whether a first latency regarding data transmission using the first mode is larger than a second latency regarding data transmission using the second mode, in operation 720.

As described with reference to FIG. 4B, a latency may be determined based on a contention time between a timepoint at which a standby for data transmission starts and a timepoint at which data transmission starts, and a transmission time between a timepoint at which data transmission starts and a timepoint at which data transmission is completed.

In connection with determining the first latency, the electronic device 500 may determine the first latency based on the product of the determined latency of data transmission at a single transmission opportunity and the determined number of transmissions.

In connection with determining the second latency, the electronic device 500 may determine the second latency based on the product of the determined latency of data transmission at a single transmission opportunity and the determined number of transmissions.

According to an example, a situation in which the first latency is larger than the second latency may corresponds to a situation in which the link state is relatively poor. According to another example, a situation in which the first latency is smaller than the second latency may corresponds to a situation in which the link state is relatively good.

The electronic device 500 may compare the first latency and the second latency and may identify the state of the multiple links based on the result of comparison.

According to an example, the electronic device 500 may confirm that the second latency is equal to or larger than (or exceeds) the first latency and may confirm that the multiple links are in a good state.

According to an example, the electronic device 500 may confirm that the second latency is equal to or smaller than (or below) the first latency and may confirm that the multiple links are in a poor state. The description that the multiple links are in a poor state may mean that, if data is transmitted to the external electronic device 320 by using the first mode, a low probability of successful transmission may be implemented.

The electronic device 500 may perform data transmission by using the second mode if the first latency is larger than the second latency (YES in operation 720), or if data related to a designated service is transmitted (Yes in operation 710), in operation 730.

According to an example, the electronic device 500 may confirm that the second latency is equal to or smaller than (or below) the first latency and may confirm that the multiple links are in a poor state. The description that the multiple links are in a poor state may mean that, if data is transmitted to the external electronic device 320 by using the first mode, a low probability of successful transmission may be implemented. The electronic device 500 may select the second mode, based on confirming that the second latency is equal to/smaller than (or below) the first latency.

The electronic device 500 may perform data transmission by using the first mode if the first latency is not larger than the second latency (NO in operation 720), in operation 740.

According to an example, the electronic device 500 may confirm that the second latency is equal to or larger than (or exceeds) the first latency and may confirm that the multiple links are in a good state. The description that the multiple links are in a good state may mean that, even if data is transmitted to the external electronic device 320 by using the first mode, a high probability of successful transmission may be implemented. The electronic device 500 may select the first mode, based on confirming that the second latency is equal to or larger than the first latency.

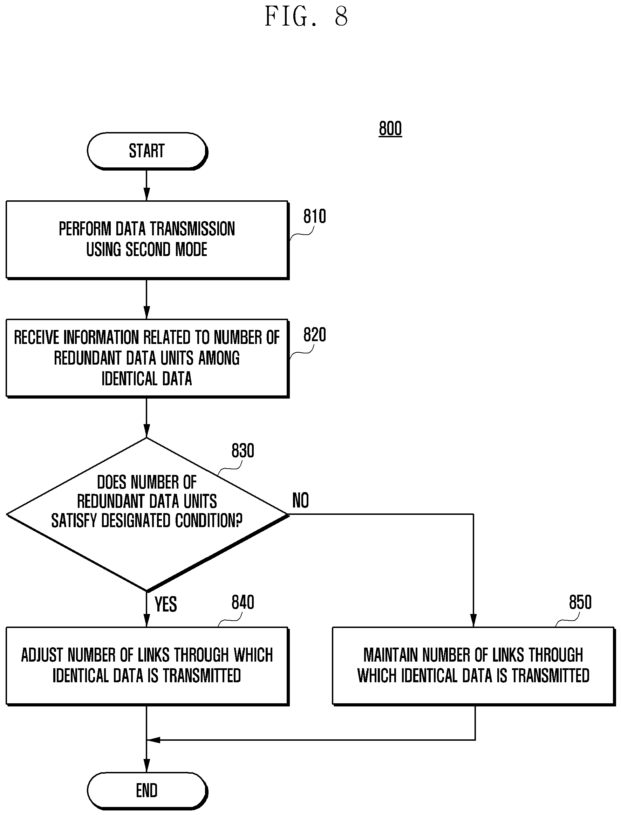

FIG. 8 is an operation flowchart 800 illustrating an embodiment in which an electronic device adjusts the number of links through which identical data is transmitted, based on the number of redundant packets received from an external electronic device, according to various embodiments.

The electronic device (for example, the electronic device 500 in FIG. 5) may perform data transmission by using a second mode in operation 810.

The second mode may refer to a mode in which the electronic device 500 transmits identical through multiple links generated between the electronic device 500 and an external electronic device (for example, the external electronic device 320 in FIG. 3).

While operating in the second mode, the electronic device 500 may duplicate data to be transmitted to the external electronic device 320, thereby generating duplicated data which is identical to the data.

According to an example, the electronic device 310 may transmit data to the external electronic device 320 through a first link (for example, the first link 331 in FIG. 3) and may transmit duplicated data to the external electronic device 320 through a second link (for example, the second link 332 in FIG. 3). When operating in the second mode, the electronic device 500 may transmit identical data to the external electronic device 320 through multiple links, thereby increasing the probability of successful data transmission.

The electronic device 500 may receive information related to the number of redundant data units, among identical data, from the external electronic device 320 in operation 820.

Information regarding the number of times a redundant data unit, among identical data, is received may include the number of times a data unit having an identical sequence number, among multiple data units (for example, MPDU) included in the data, is received.

According to an example, the description that the external electronic device 320 receives a data unit having an identical sequence number relatively frequently may mean that the quality of multiple links is improved.

According to an example, the description that the external electronic device 320 fails to receive a data unit having an identical sequence number relatively frequently may mean that the quality of multiple links is degraded.

The electronic device 500 may confirm whether the number of redundant data units satisfies a designated condition in operation 830.

The designated condition may include a condition that the number of times the external electronic device 320 receives identical data is equal to or larger than a designated number of times, or a condition that the number of times the external electronic device 320 receives identical data increases. The description that the number of times the external electronic device 320 receives redundant data units increases satisfies a designated condition may mean that the link quality improves.

The electronic device 500 may adjust the number of links through which identical data is transmitted, based on that the number of redundant data units satisfies a designated condition (YES in operation 830), in operation 840.

The electronic device 500 may adjust the number of links through which identical data is transmitted, based on that the number of times identical data that is received satisfies a designated condition. Adjusting the number of links through which identical data is transmitted may include reducing the number of links through which identical data is transmitted.

The electronic device 500 may maintain the number of links through which identical data is transmitted, based on that the number of redundant data units does not satisfy the designated condition (NO in operation 830), in operation 850.

The electronic device 500 may not decrease the number of links through which identical data is transmitted (or may maintain or increase the number of links through which identical data is transmitted), based on that the number of times identical data is received does not satisfy the designated condition.

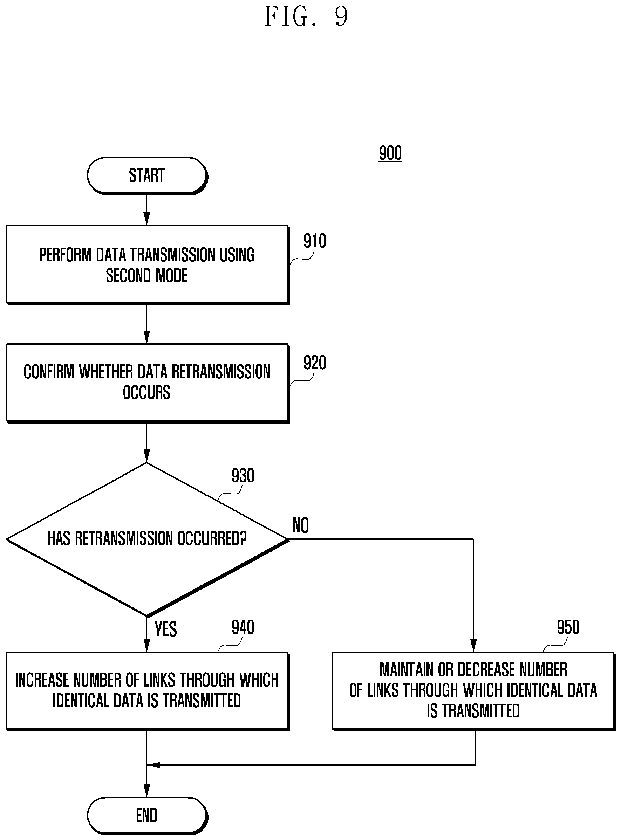

FIG. 9 is an operation flowchart 900 illustrating an embodiment in which an electronic device adjusts the number of links through which identical data is transmitted, based on whether data retransmission occurs, according to various embodiments.

The electronic device (for example, the electronic device 500 in FIG. 5) may perform data transmission by using a second mode in operation 910.

The second mode may refer to a mode in which the electronic device 500 transmits identical data through multiple links generated between the electronic device 500 and an external electronic device (for example, the external electronic device 320 in FIG. 3).

While operating in the second mode, the electronic device 500 may duplicate data to be transmitted to the external electronic device 320, thereby generating duplicated data which is identical to the data.

According to an example, the electronic device 310 may transmit data to the external electronic device 320 through a first link (for example, the first link 331 in FIG. 3) and may transmit duplicated data to the external electronic device 320 through a second link (for example, the second link 332 in FIG. 3). When operating in the second mode, the electronic device 500 may transmit identical data to the external electronic device 320 through multiple links, thereby increasing the probability of successful data transmission.

The electronic device 500 may confirm whether data retransmission occurs in operation 920.

According to an example, while operating in the second mode, the electronic device 500 may identify the number of times identical data is retransmitted to the external electronic device 320. The number of times identical data is retransmitted may be received from the external electronic device 320 or directly identified by the electronic device 500.

The electronic device 500 may increase the number of links through which identical data is transmitted, based on confirming that retransmission of identical data occurs (YES in operation 930), in operation 940.

The electronic device 500 may increase the number of links through which identical data is transmitted, based on confirming that identical data is retransmitted to the external electronic device 320. The description that identical data is retransmitted to the external electronic device 320 may mean that the link quality is poor. Therefore, the processor 520 may increase the number of links through which identical data is transmitted, based on the occurrence of retransmission.

The electronic device 500 may maintain or decrease the number of links through which identical data is transmitted, based on confirming that retransmission of identical data does not occur (NO in operation 930), in operation 950.

The electronic device 500 may not increase the number of links through which identical data is transmitted, based on confirming that identical data is not retransmitted to the external electronic device 320. Not increasing the number of links through which identical data is transmitted may include reducing the number of links through which identical data is transmitted or maintaining the number of links through which identical data is transmitted.

An electronic device according to an embodiment may include a communication circuit configured to perform short-range wireless communication through one link or multiple links generated between an external electronic device and the electronic device. The electronic device may include a processor operatively connected to the communication circuit. The processor may identify the state of the multiple links, based on information transmitted by the external electronic device. The processor may select one mode from a first mode in which data is divided and transmitted through the multiple links and a second mode in which identical data is transmitted through the multiple links, based on the state of the multiple links. The processor may control the communication circuit so as to transmit the data to the external electronic device through the selected mode.

In the electronic device according to an embodiment, the processor may identify a first latency required to transmit the data in case of operating in the first mode and a second latency required to transmit the data in case of operating in the second mode. The processor may be configured to identify the state of the multiple links, based on the result of comparing the first latency and the second latency.

In the electronic device according to an embodiment, the processor may be configured to select the first mode, based on the second latency being larger than the first latency, or select the second mode, based on the second latency being smaller than the first latency.

In the electronic device according to an embodiment, the processor may be configured to select the second mode, based on the second latency being smaller than the first latency and being smaller than a latency required by a service related to transmission of the data.

In the electronic device according to an embodiment, the processor may identify a first latency which is the sum of a first transmission time necessary to transmit the data and a contention time which is a time of standby for transmission of the data, based on a ratio between a time necessary for a counter to be allocated to the electronic device to be reduced by a designated unit and a time during which the at least one link remains idle, and a designated number of times of the counter, in case of operating in the first mode. The processor may be configured to identify a second latency which is the sum of a second transmission time necessary to transmit the data and the contention time, in case of operating in the second mode.

In the electronic device according to an embodiment, the processor may receive, from the external electronic device, information related to the number of times the identical data is received, while operating in the second mode. The processor may be configured to determine the number of links through which the identical data is transmitted, among the multiple links, based on the number of times the identical data is received.

In the electronic device according to an embodiment, the processor may be configured to decrease the number of links through which the identical data is transmitted, based on an increase in the number of times the identical data is received.

In the electronic device according to an embodiment, the processor may be configured to increase the number of links through which the identical data is transmitted, based on a decrease in the number of times the identical data is received.

In the electronic device according to an embodiment, the processor may confirm whether the identical data is retransmitted, while operating in the second mode. The processor may be configured to determine the number of links through which the identical data is transmitted, among the multiple links, based on whether the identical data is retransmitted.

In the electronic device according to an embodiment, the processor may be configured to increase the number of links through which the identical data is transmitted, based on the occurrence of retransmission of the identical data.

In the electronic device according to an embodiment, the processor may be configured to select a mode from a first mode in which data is divided and transmitted through the multiple links, based on the state of the multiple links and characteristics of a service related to transmission of the data, and a second mode in which identical data is transmitted through the multiple links.

A method for operating an electronic device according to an embodiment may include an operation of identifying the state of multiple links generated to perform short-range wireless communication between an external electronic device and the electronic device, based on information transmitted by the external electronic device. The method for operating an electronic device may include an operation of selecting one mode from a first mode in which data is divided and transmitted through the multiple links and a second mode in which identical data is transmitted through the multiple links, based on the state of the multiple links. The method for operating an electronic device may include an operation of transmitting the data to the external electronic device through the selected mode.

In the method for operating an electronic device according to an embodiment, the operation of identifying the state of multiple links may include an operation of identifying a first latency required to transmit the data in case of operating in the first mode and a second latency required to transmit the data in case of operating in the second mode. The operation of identifying the state of multiple links may include an operation of identifying the state of the multiple links, based on the result of comparing the first latency and the second latency.

In the method for operating an electronic device according to an embodiment, the operation of selecting one mode from a first mode and a second mode may include an operation of selecting the first mode, based on the second latency being larger than the first latency, or an operation of selecting the second mode, based on the second latency being smaller than the first latency.

In the method for operating an electronic device according to an embodiment, the operation of selecting one mode from a first mode and a second mode may include an operation of selecting the second mode, based on the second latency being smaller than the first latency and being smaller than a latency required by a service related to transmission of the data.

In the method for operating an electronic device according to an embodiment, the operation of identifying the state of multiple links may include an operation of identifying a first latency which is the sum of a first transmission time necessary to transmit the data and a contention time which is a time of standby for transmission of the data, based on a ratio between a time necessary for a counter to be allocated to the electronic device to be reduced by a designated unit and a time during which the at least one link remains idle, and a designated number of times of the counter, in case of operating in the first mode. The operation of identifying the state of multiple links may include an operation of identifying a second latency which is the sum of a second transmission time necessary to transmit the data and the contention time, in case of operating in the second mode.

The method for operating an electronic device according to an embodiment may further include an operation of receiving, from the external electronic device, information related to the number of times the identical data is received, while operating in the second mode. The method for operating an electronic device may further include an operation of determining the number of links through which the identical data is transmitted, among the multiple links, based on the number of times the identical data is received.

In the method for operating an electronic device according to an embodiment, the operation of determining the number of links may include an operation of decreasing the number of links through which the identical data is transmitted, based on an increase in the number of times the identical data is received.

In the method for operating an electronic device according to an embodiment, the operation of determining of the number of links may include an operation of increasing the number of links through which the identical data is transmitted, based on a decrease in the number of times the identical data is received.

The method for operating an electronic device according to an embodiment may further include an operation of confirming whether the identical data is retransmitted, while operating in the second mode. The method for operating an electronic device may further include an operation of determining the number of links through which the identical data is transmitted, among the multiple links, based on whether the identical data is retransmitted.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device comprising:

   a communication circuit configured to perform short-range wireless communication through one link or multiple links that are set up between an external electronic device and the electronic device; and
   a processor operatively connected to the communication circuit, the processor configured to:

   identify a state of the multiple links, based on information transmitted by the external electronic device;
   select one mode from at least two modes, including a first mode in which data is divided and transmitted through the multiple links and a second mode in which identical data is transmitted through the multiple links, based on the state of the multiple links; and
   control the communication circuit to transmit the data to the external electronic device through the selected mode.

2. The electronic device of claim 1, wherein the processor is further configured to:

   identify a first latency required to transmit the data in a case of operating in the first mode and a second latency required to transmit the data in case of operating in the second mode; and
   identify the state of the multiple links, based on a result of comparing the first latency and the second latency.

3. The electronic device of claim 2, wherein the processor is further configured to select the first mode, when the second latency is larger than the first latency, or select the second mode, when the second latency is smaller than the first latency.

4. The electronic device of claim 2, wherein the processor is configured to select the second mode, when the second latency is smaller than both the first latency and a latency required by a service related to transmission of the data.

5. The electronic device of claim 2, wherein the processor is further configured to:

   identify a first latency which is a sum of a first transmission time necessary to transmit the data and a contention time which is a time of standby for transmission of the data, based on a ratio between a time necessary for a counter allocated to the electronic device to be reduced by a designated unit and a time during which the at least one link remains idle, in the case of operating in the first mode; and
   identify a second latency which is a sum of a second transmission time necessary to transmit the data and the contention time, in the case of operating in the second mode.

6. The electronic device of claim 1, wherein the processor is further configured to:

   receive, from the external electronic device, information related to a number of times the identical data is received through the multiple links, while operating in the second mode; and
   determine a number of links through which the data is transmitted, among the multiple links, based on the number of times the identical data is received.

7. The electronic device of claim 6, wherein the processor is further configured to decrease the number of links through which the identical data is transmitted, based on an increase in the number of times the identical data is received.

8. The electronic device of claim 6, wherein the processor is further configured to increase the number of links through which the identical data is transmitted, based on a decrease in the number of times the identical data is received.

9. The electronic device of claim 1, wherein the processor is further configured to:

   confirm whether the identical data is retransmitted, while operating in the second mode; and
   determine a number of links through which the identical data is transmitted, among the multiple links, based on whether the identical data is retransmitted.

10. The electronic device of claim 9, wherein the processor is further configured to increase the number of links through which the identical data is transmitted, based on the occurrence of retransmission of the identical data.

11. The electronic device of claim 1, wherein the processor is further configured to select a mode from a first mode in which data is divided and transmitted through the multiple links, based on the state of the multiple links and characteristics of a service related to transmission of the data, and a second mode in which identical data is transmitted through the multiple links.

12. A method for operating an electronic device, the method comprising:

identifying a state of multiple links that are set up between an external electronic device and the electronic device to perform short-range wireless communication, based on information transmitted by the external electronic device;
selecting one mode from at least two modes, including a first mode in which data is divided and transmitted through the multiple links and a second mode in which identical data is transmitted through the multiple links, based on the state of the multiple links; and
transmitting the data to the external electronic device through the selected mode.

13. The method for operating an electronic device of claim 12, wherein the identifying of the state of the multiple links comprises:

identifying a first latency required to transmit the data in a case of operating in the first mode and a second latency required to transmit the data in a case of operating in the second mode; and
identifying the state of the multiple links, based on a result of comparing the first latency and the second latency.

14. The method for operating an electronic device of claim 13, wherein the selecting of one mode from at least two modes comprises:

selecting the first mode, when the second latency is larger than the first latency; or
selecting the second mode, when the second latency is smaller than the first latency.

15. The method for operating an electronic device of claim 13, wherein the selecting of one mode from at least two modes comprises selecting the second mode when the second latency is smaller than both the first latency and a latency required by a service related to transmission of the data.

# FIG. 1

EP 4 543 134 A1

# FIG. 2

**200**

**140**

## PROGRAM

### APPLICATIONS

| 251 | 253 | 255 | 257 | 259 | 261 | 263 |
|-----|-----|-----|-----|-----|-----|-----|
| HOME | DIALER | SMS/MMS | IM | BROWSER | CAMERA | ALARM |

| 265 | 267 | 269 | 271 | 273 | 275 | 277 |
|-----|-----|-----|-----|-----|-----|-----|
| CONTACT | VOICE RECOGNITION | E-MAIL | CALENDAR | MEDIA PLAYER | ALBUM | WATCH |

| 279 | 281 |
|-----|-----|
| HEALTH | ENVIRONMENT INFORMATION |

**146**

### MIDDLEWARE

| 201 | 203 | 205 | 207 | 209 |
|-----|-----|-----|-----|-----|
| APPLICATION MANAGER | WINDOW MANAGER | MULTIMEDIA MANAGER | RESOURCE MANAGER | POWER MANAGER |

| 211 | 213 | 215 | 217 | 219 |
|-----|-----|-----|-----|-----|
| DATABASE MANAGER | PACKAGE MANAGER | CONNECTIVITY MANAGER | NOTIFICATION MANAGER | LOCATION MANAGER |

| 221 | 223 | 225 | 227 |
|-----|-----|-----|-----|
| GRAPHIC MANAGER | SECURITY MANAGER | TELEPHONY MANAGER | VOICE RECOGNITION MANAGER |

**144**

## OPERATING SYSTEM

**142**

EP 4 543 134 A1

# FIG. 3

<u>300</u>

310

**ELECTRONIC DEVICE**

313    323

331

**FIRST LINK**

311    **FIRST COMMUNICATION CIRCUIT**

314    324

332

**SECOND LINK**

312    **SECOND COMMUNICATION CIRCUIT**

320

**EXTERNAL ELECTRONIC DEVICE**

**THIRD COMMUNICATION CIRCUIT**    321

**FOURTH COMMUNICATION CIRCUIT**    322

FIG. 4A

401 FIRST ELECTRONIC DEVICE
402 SECOND ELECTRONIC DEVICE
403 THIRD ELECTRONIC DEVICE
404 FOURTH ELECTRONIC DEVICE

411 Frame
412 Defer
413 Defer
414 Defer

415 DIFS
416 { 416-a, 416-b }
417 418 { 418-a, 418-b }
419 Frame
420 DIFS
421 416-b 422
423 Frame
424 Frame
425 DIFS

# FIG. 4B

FIG. 4C

FIG. 4D

310

440

320

331

ELECTRONIC DEVICE

| 1 | 2 | 3 | 4 |

EXTERNAL
ELECTRONIC DEVICE

441

332

| 1 | 2 | 3 | 4 |

# FIG. 5

<u>500</u>

510

520

| COMMUNICATION CIRCUIT | ←→ | PROCESSOR |

# FIG. 6

<u>600</u>

```
START
```

IDENTIFY STATE OF MULTIPLE LINKS BETWEEN ELECTRONIC
DEVICE AND EXTERNAL ELECTRONIC DEVICE — 610

SELECT ONE MODE FROM FIRST MODE IN WHICH DATA IS DIVIDED
AND TRANSMITTED THROUGH MULTIPLE LINKS AND SECOND MODE
IN WHICH IDENTICAL DATA IS TRANSMITTED THROUGH MULTIPLE
LINKS, BASED ON STATE OF MULTIPLE LINKS — 620

TRANSMIT DATA TO EXTERNAL ELECTRONIC DEVICE BY
USING SELECTED MODE — 630

```
END
```

# FIG. 7

700

```
        ┌─────────────┐
        │    START    │
        └──────┬──────┘
               │
               ▼
         ╱─────────────╲  710
   YES  ╱  IS DATA RELATED  ╲
  ◄────╱  TO DESIGNATED      ╲
       ╲  SERVICE TRANSMITTED? ╱
        ╲─────────────╱
               │ NO
               ▼
        ╱──────────────╲  720
       ╱ IS FIRST LATENCY ╲
      ╱  REGARDING DATA     ╲
     ╱ TRANSMISSION USING     ╲   NO
     ╲ FIRST MODE LARGER THAN  ╱────►
      ╲ SECOND LATENCY        ╱
       ╲ REGARDING DATA      ╱
        ╲ TRANSMISSION      ╱
         ╲ USING SECOND MODE?╱
           ╲──────────────╱
               │ YES
               ▼
   ┌───────────────────────┐  730      ┌───────────────────────┐  740
   │ PERFORM DATA TRANSMISSION │        │ PERFORM DATA TRANSMISSION │
   │ USING SECOND MODE        │        │ USING FIRST MODE         │
   └───────────┬───────────┘            └───────────┬───────────┘
               │                                    │
               ▼◄───────────────────────────────────┘
        ┌─────────────┐
        │     END     │
        └─────────────┘
```

## FIG. 8

800

```
              ┌──────────────┐
              │    START     │
              └──────┬───────┘
                     │
                     ▼
        ┌──────────────────────────────┐
        │   PERFORM DATA TRANSMISSION   │  810
        │      USING SECOND MODE        │
        └──────────────┬───────────────┘
                       │
                       ▼
        ┌──────────────────────────────────┐
        │ RECEIVE INFORMATION RELATED TO    │  820
        │ NUMBER OF REDUNDANT DATA UNITS    │
        │ AMONG IDENTICAL DATA              │
        └──────────────┬───────────────────┘
                       │
                       ▼
                    ╱      ╲                    830
                 ╱            ╲
              ╱   DOES NUMBER OF ╲   NO
            ╱   REDUNDANT DATA UNITS ╲─────────────┐
            ╲  SATISFY DESIGNATED     ╱            │
              ╲  CONDITION?          ╱             │
                 ╲               ╱                 │
                    ╲  YES  ╱                      │
                       │                           │
                       ▼  840                      ▼  850
        ┌──────────────────────────┐   ┌──────────────────────────┐
        │ ADJUST NUMBER OF LINKS    │   │ MAINTAIN NUMBER OF LINKS │
        │ THROUGH WHICH IDENTICAL   │   │ THROUGH WHICH IDENTICAL  │
        │ DATA IS TRANSMITTED       │   │ DATA IS TRANSMITTED      │
        └──────────────┬───────────┘   └─────────────┬────────────┘
                       │                              │
                       ◄──────────────────────────────┘
                       │
                       ▼
              ┌──────────────┐
              │     END      │
              └──────────────┘
```

FIG. 9

900

```
        ┌──────────┐
        │  START   │
        └────┬─────┘
             ↓
  ┌─────────────────────────┐
  │ PERFORM DATA TRANSMISSION│  910
  │ USING SECOND MODE        │
  └──────────┬──────────────┘
             ↓
  ┌─────────────────────────┐
  │ CONFIRM WHETHER DATA     │  920
  │ RETRANSMISSION OCCURS    │
  └──────────┬──────────────┘
             ↓
        ◇ HAS RETRANSMISSION OCCURRED? ◇  930
```

START

PERFORM DATA TRANSMISSION USING SECOND MODE — 910

CONFIRM WHETHER DATA RETRANSMISSION OCCURS — 920

HAS RETRANSMISSION OCCURRED? — 930

NO

YES — 940

INCREASE NUMBER OF LINKS THROUGH WHICH IDENTICAL DATA IS TRANSMITTED

950

MAINTAIN OR DECREASE NUMBER OF LINKS THROUGH WHICH IDENTICAL DATA IS TRANSMITTED

END

<table>
<tr><td colspan="2">INTERNATIONAL SEARCH REPORT</td><td colspan="2">International application No.<br>**PCT/KR2023/008051**</td></tr>
</table>

**A. CLASSIFICATION OF SUBJECT MATTER**

**H04W 76/15**(2018.01)i; **H04W 28/04**(2009.01)i; **H04W 24/02**(2009.01)i; **H04W 84/12**(2009.01)i; **H04W 88/02**(2009.01)i; **H04W 88/06**(2009.01)i

According to International Patent Classification (IPC) or to both national classification and IPC

**B. FIELDS SEARCHED**

Minimum documentation searched (classification system followed by classification symbols)

H04W 76/15(2018.01); H04L 1/16(2006.01); H04W 76/11(2018.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 멀티링크(Multi link), 지연시간(latency), 모드(mode), 개수(number), 재전송 (retransmission)

**C. DOCUMENTS CONSIDERED TO BE RELEVANT**

| Category* | Citation of document, with indication, where appropriate, of the relevant passages | Relevant to claim No. |
|---|---|---|
| X<br>A | KONDO, Yoshihisa et al. Discussion on Adaptation of MLO to Dynamic Changes in Link Conditions. IEEE 802.11-21/1928r0. 28 December 2021.<br>See pages 2-10. | 1-4,11-15<br>5-10 |
| A | EP 3982693 A1 (KABUSHIKI KAISHA TOSHIBA) 13 April 2022 (2022-04-13)<br>See paragraphs [0397]-[0403]. | 1-15 |
| A | KR 10-2022-0085829 A (HUAWEI TECHNOLOGIES CO., LTD.) 22 June 2022 (2022-06-22)<br>See paragraphs [0260]-[0264]. | 1-15 |
| A | KR 10-2022-0003665 A (FRAUNHOFER-GESELLSCHAFT ZUR FOERDERUNG DER ANGEWANDTEN FORSCHUNG E.V.) 10 January 2022 (2022-01-10)<br>See paragraphs [0164]-[0165]. | 1-15 |
| A | WO 2021-180141 A1 (HUAWEI TECHNOLOGIES CO., LTD.) 16 September 2021 (2021-09-16)<br>See claims 18-21. | 1-15 |

☐ Further documents are listed in the continuation of Box C.　　☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 September 2023** | **06 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2023/008051**

| Patent document cited in search report | | | Publication date (day/month/year) | Patent family member(s) | | | Publication date (day/month/year) |
|---|---|---|---|---|---|---|---|
| EP | 3982693 | A1 | 13 April 2022 | CN | 114389627 | A | 22 April 2022 |
| | | | | JP | 2022-061316 | A | 18 April 2022 |
| | | | | US | 2022-0110123 | A1 | 07 April 2022 |
| KR | 10-2022-0085829 | A | 22 June 2022 | AU | 2020-379794 | A1 | 19 May 2022 |
| | | | | AU | 2020-379794 | B2 | 06 July 2023 |
| | | | | BR | 112022008766 | A2 | 26 July 2022 |
| | | | | CN | 112531111 | A | 19 March 2021 |
| | | | | CN | 112531111 | B | 09 November 2021 |
| | | | | CN | 112788716 | A | 11 May 2021 |
| | | | | CN | 113390217 | A | 14 September 2021 |
| | | | | CN | 113390217 | B | 07 June 2022 |
| | | | | CN | 211554394 | U | 22 September 2020 |
| | | | | CN | 211554395 | U | 22 September 2020 |
| | | | | EP | 4044692 | A1 | 17 August 2022 |
| | | | | EP | 4092363 | A1 | 23 November 2022 |
| | | | | JP | 2022-536431 | A | 17 August 2022 |
| | | | | JP | 2023-500341 | A | 05 January 2023 |
| | | | | JP | 2023-511674 | A | 22 March 2023 |
| | | | | KR | 10-2021-0095184 | A | 30 July 2021 |
| | | | | US | 2022-0093884 | A1 | 24 March 2022 |
| | | | | US | 2022-0264429 | A1 | 18 August 2022 |
| | | | | US | 2023-0119128 | A1 | 20 April 2023 |
| | | | | WO | 2021-037274 | A1 | 04 March 2021 |
| | | | | WO | 2021-089022 | A1 | 14 May 2021 |
| | | | | WO | 2021-179568 | A1 | 16 September 2021 |
| | | | | WO | 2021-179678 | A1 | 16 September 2021 |
| | | | | WO | 2021-179734 | A1 | 16 September 2021 |
| | | | | WO | 2021-179870 | A1 | 16 September 2021 |
| | | | | WO | 2021-180176 | A1 | 16 September 2021 |
| KR | 10-2022-0003665 | A | 10 January 2022 | CN | 111316732 | A | 19 June 2020 |
| | | | | EP | 3679754 | A1 | 15 July 2020 |
| | | | | JP | 2020-532919 | A | 12 November 2020 |
| | | | | JP | 2023-106368 | A | 01 August 2023 |
| | | | | JP | 7280247 | B2 | 23 May 2023 |
| | | | | KR | 10-2020-0044946 | A | 29 April 2020 |
| | | | | KR | 10-2347361 | B1 | 04 January 2022 |
| | | | | US | 11160138 | B2 | 26 October 2021 |
| | | | | US | 11596025 | B2 | 28 February 2023 |
| | | | | US | 2020-0205230 | A1 | 25 June 2020 |
| | | | | US | 2022-0039204 | A1 | 03 February 2022 |
| | | | | WO | 2019-048384 | A1 | 14 March 2019 |
| WO | 2021-180141 | A1 | 16 September 2021 | AU | 2021-233050 | A1 | 16 September 2021 |
| | | | | BR | 112022017975 | A2 | 06 December 2022 |
| | | | | CN | 113394859 | A | 14 September 2021 |
| | | | | CN | 113394979 | A | 14 September 2021 |
| | | | | CN | 113394989 | A | 14 September 2021 |
| | | | | CN | 113395140 | A | 14 September 2021 |
| | | | | EP | 4109798 | A1 | 28 December 2022 |
| | | | | EP | 4120506 | A1 | 18 January 2023 |
| | | | | EP | 4120537 | A1 | 18 January 2023 |

Form PCT/ISA/210 (patent family annex) (July 2022)

International application No.

**PCT/KR2023/008051**

| Patent document cited in search report | Publication date (day/month/year) | Patent family member(s) | | Publication date (day/month/year) |
|---|---|---|---|---|
| | | EP | 4120539 A1 | 18 January 2023 |
| | | JP | 2023-517081 A | 21 April 2023 |
| | | KR | 10-2022-0154149 A | 21 November 2022 |
| | | US | 2022-0416946 A1 | 29 December 2022 |
| | | US | 2023-0006462 A1 | 05 January 2023 |
| | | US | 2023-0006563 A1 | 05 January 2023 |
| | | US | 2023-0006570 A1 | 05 January 2023 |
| | | WO | 2021-179529 A1 | 16 September 2021 |
| | | WO | 2021-179819 A1 | 16 September 2021 |
| | | WO | 2021-179938 A1 | 16 September 2021 |
| | | WO | 2021-179941 A1 | 16 September 2021 |
| | | WO | 2021-179945 A1 | 16 September 2021 |

Form PCT/ISA/210 (patent family annex) (July 2022)